# EUROPEAN PATENT APPLICATION

(11) **EP 4 557 709 A1**
(43) Date of publication of application: **21.05.2025**
(21) Application number: 23849129.4
(22) Date of filing: 30.06.2023
(51) Int. Cl.: H04L 67/56

(54) **PACKET SENDING METHOD, APPARATUS AND SYSTEM**

(30) Priority: 30.07.2022 CN 202210911689; 29.09.2022 CN 202211201183
(71) Applicant: Huawei Technologies Co., Ltd., Shenzhen, Guangdong 518129 (CN)
(72) Inventor: MAO, Jianwei, Shenzhen, Guangdong 518129 (CN); HU, Xiaozheng, Shenzhen, Guangdong 518129 (CN); WANG, Shiyuan, Shenzhen, Guangdong 518129 (CN); PENG, Shuping, Shenzhen, Guangdong 518129 (CN)
(74) Representative: Grünecker Patent- und Rechtsanwälte PartG mbB
(86) International application number: PCT/CN2023/104865
(87) International publication number: WO 2024/027419

(57) **Abstract**

A packet sending method, an apparatus, and a system are provided, and pertain to the field of communication technologies. In the solutions provided in this application, after receiving a first packet that is sent by a first end-side device and in which a first application-aware identifier is encapsulated, a network device in the middle of the network can encapsulate the first application-aware identifier in a second packet obtained by processing the first packet. Then, the network device in the middle of the network can send the second packet to a second end-side device. Therefore, it may be ensured that a packet that carries application-aware information can be normally transmitted in a plurality of connections. In addition, it may be further ensured that both a transmission link between the first end-side device and the network device in the middle of the network and a transmission link between the network device in the middle of the network and the second end-side device can provide, based on a same application-aware identifier, a refined network service for a service flow to which the first packet belongs, to ensure transmission performance of the service flow.

## Description

This application claims priorities to Chinese Patent Application No. 202210911689.8, filed on July 30, 2022 and entitled "APN END-TO-END DEPLOYMENT TECHNICAL SOLUTION", and to Chinese Patent Application No. 202211201183.4, filed on September 29, 2022 and entitled "PACKET SENDING METHOD, APPARATUS, AND SYSTEM", both of which are incorporated herein by reference in their entireties.

### TECHNICAL FIELD

This application relates to the field of communication technologies, and in particular, to a packet sending method, an apparatus, and a system.

### BACKGROUND

Application-aware networking (application-aware networking, APN) is a technology in which application-aware information is carried in an IPv6 extension header of an internet protocol version 6 (Internet protocol version 6, IPv6) service packet. After the service packet enters a network, the network can directly determine an application and a requirement of the application based on the application-aware information, to provide a refined service such as network resource allocation, transmission path scheduling, service level agreement (service level agreement, SLA) service quality assurance, dynamic transmission optimization, quality of experience (quality of experience, QoE) optimization, and transmission quality monitoring for the application.

In a conventional technology, the application-aware information may be usually carried in a hop-by-hop options header (hop-by-hop options header, HBH), a destination options header (destination options header, DOH), a routing header (routing header, RH), or another IPv6 extension header of the IPv6 service packet.

However, some network devices in the middle of the network such as a load balancer, a reverse agent device, and a network address translation (network address translation, NAT) device usually exist in the network. The network device in the middle of the network splits an end-to-end connection between a terminal and a server into a plurality of connections, and the packet that carries the application-aware information may not be normally transmitted in the plurality of connections, to affect transmission performance of a service flow.

### SUMMARY

This application provides a packet sending method, an apparatus, and a system, to resolve a technical problem that a packet that carries application-aware information cannot be normally transmitted in a plurality of connections and transmission performance of a service flow is affected.

According to a first aspect, a packet sending method is provided, applied to a network device in the middle of the network. The network device in the middle of the network is separately connected to a first end-side device and a second end-side device. The method includes: receiving a first packet sent by the first end-side device, where the first packet includes a first application-aware identifier; encapsulating, based on that the first packet includes the first application-aware identifier, the first application-aware identifier in a second packet obtained by processing the first packet; and sending the second packet to the second end-side device.

A payload in the second packet is obtained based on a payload in the first packet. For example, the payload in the second packet may be the same as the payload in the first packet. According to the solution provided in this application, the network device in the middle of the network may forcibly inherit an application-aware identifier, to ensure that a packet that carries the application-aware information can be normally transmitted in a plurality of connections. In addition, it may be further ensured that both a transmission link between the first end-side device and the network device in the middle of the network and a transmission link between the network device in the middle of the network and the second end-side device can provide, based on the first application-aware identifier, a refined network service for a service flow to which the first packet belongs. Therefore, it may be ensured that transmission performance of the service flow is good.

Optionally, the process of processing the first packet may include: performing network address translation or port translation processing on the first packet. Correspondingly, the network device in the middle of the network may be a NAT device or a load balancer. Alternatively, the payload in the first packet and a target packet header are encapsulated. The target packet header is different from a packet header of the first packet. Correspondingly, the network device in the middle of the network may be a load balancer or a reverse agent device (also referred to as a reverse agent server).

Optionally, the method may further include: receiving a third packet sent by the second end-side device, where the third packet includes a second application-aware identifier; and sending, to the second end-side device based on that the third packet includes the second application-aware identifier, a fourth packet in which the second application-aware identifier is encapsulated.

Because the network device in the middle of the network implements carrying of an application-aware identifier during returning, even if a network management plane or a controller cannot distribute the application-aware identifier to the network device in the middle of the network, the network device in the middle of the network can still send a packet that carries a specified application-aware identifier. Therefore, flexibility of using a packet to carry an application-aware identifier is effectively improved.

Optionally, the third packet includes application-aware information, and the aware information includes the second application-aware identifier; and the process of sending, to the second end-side device based on that the third packet includes the second application-aware identifier, a fourth packet in which the second application-aware identifier is encapsulated may include: sending, to the second end-side device based on that the third packet includes the second application-aware identifier and the application-aware information meets a target condition, the fourth packet in which the second application-aware identifier is encapsulated. The target condition may include one of the following conditions: a reflect flag in the application-aware information is set; a refresh flag in the application-aware information is set; and a mark flag in the application-aware information is different from a mark flag recorded in the network device in the middle of the network.

Based on the flag carried in the application-aware information, an application-aware identifier carried in a packet sent by the network device in the middle of the network can be flexibly controlled, to effectively improve packet sending flexibility.

Optionally, the method may further include: if the reflect flag in the application-aware information is not set, sending, to the second end-side device, a packet in which no application-aware identifier is encapsulated; or sending a fifth packet to the second end-side device if the refresh flag in the application-aware information is not set, or the mark flag in the application-aware information is the same as the mark flag recorded in the network device in the middle of the network. A same application-aware identifier is encapsulated in the fifth packet and a historical packet, and the historical packet is a packet sent to the second end-side device before the fifth packet.

After receiving, for a first time, a packet that is sent by the second end-side device and that carries a mark flag, the network device in the middle of the network may record the mark flag. In addition, if a mark flag in a packet that is subsequently received by the network device in the middle of the network and that is sent by the second end-side device is different from the mark flag recorded by the network device in the middle of the network, the mark flag recorded by the network device in the middle of the network may be updated, to keep the recorded mark flag consistent with the mark flag in the packet sent by the second end-side device.

Optionally, after the sending, to the second end-side device, a fourth packet in which the second application-aware identifier is encapsulated, the method may further include: receiving a sixth packet sent by the second end-side device, where application-aware information in the sixth packet includes the second application-aware identifier and a withdraw flag; and sending, to the second end-side device based on that the withdraw flag is set, a seventh packet in which the second application-aware identifier is not encapsulated.

That the flag is set may mean that a value of the flag is a valid value, for example, 1. That the flag is not set may mean that a value of the flag is an invalid value, for example, 0.

According to a second aspect, a packet sending method is provided, applied to a first end-side device. The first end-side device is connected to a second end-side device through a network device in the middle of the network, and the method includes: sending a first packet to the network device in the middle of the network. The first packet includes a first application-aware identifier. The first packet is used by the network device in the middle of the network to encapsulate, based on the first application-aware identifier, the first application-aware identifier in a second packet obtained by processing the first packet, and send the second packet to the second end-side device.

Optionally, before the sending a first packet to the network device in the middle of the network, the method may further include: receiving an encapsulation rule delivered by a controller; and encapsulating the first application-aware identifier in the first packet if a service flow to which the first packet belongs satisfies the encapsulation rule.

An APN agent program and an APN protocol module may be deployed in the first end-side device (the APN agent program and the APN protocol module may be integrated). The APN agent program may receive the encapsulation rule delivered by the controller, and the APN protocol module may encapsulate the first application-aware identifier in the first packet based on the encapsulation rule.

Optionally, the encapsulation rule may include traffic identification information and application information; and the process of encapsulating the first application-aware identifier in the first packet if a service flow to which the first packet belongs satisfies the encapsulation rule may include: encapsulating the first application-aware identifier in the first packet based on the application information if flow information of the service flow to which the first packet belongs matches the traffic identification information.

Because the encapsulation rule further includes the application information, the first end-side device may encapsulate, in the first packet based on the application information, an application-aware identifier specified by the controller.

Optionally, the method may further include: sending a detection packet to a destination end device, where the detection packet includes application-aware information, and the detection packet is used by the destination end device to feed back a response packet; and determining, based on the response packet, whether a transmission network between the first end-side device and the destination end device supports to transmit a packet that carries the application-aware information.

If the first end-side device determines that the transmission network supports to transmit the packet that carries the application-aware information, the first end-side device may use, to carry the application-aware information, a packet to be sent to the destination end device subsequently. In other words, the first end-side device may enable an APN function. If the first end-side device determines that the transmission network does not support to transmit the packet that carries the application-aware information, the first end-side device does not need to use, to carry the application-aware information, a packet to be sent to the destination end device subsequently. In other words, the first end-side device may disable the APN function.

Optionally, the process of determining, based on the response packet, whether a transmission network between the first end-side device and the destination end device supports to transmit a packet that carries the application-aware information may include: if the received response packet carries the application-aware information, or if the received response packet indicates that the destination end device has received the detection packet, determining that the transmission network supports to transmit the packet that carries the application-aware information; or if the received response packet does not carry the application-aware information, or if the received response packet indicates that the destination end device does not receive the detection packet, or if the response packet is not received within waiting duration, determining that the transmission network does not support to transmit the packet that carries the application-aware information.

Optionally, the detection packet may meet at least one of the following conditions: the application-aware information includes a detection flag; the detection packet further includes a detection option; an application-aware identifier in the application-aware information is a detection identifier indicating detection; a destination port number of the detection packet is a detection port number used for detection; and the detection packet is an internet control message protocol version 6 (Internet control message protocol version 6, ICMPv6) packet.

Based on the detection packet that meets the foregoing condition, the destination end device can accurately identify the detection packet and feed back the response packet, to ensure reliable detection of the transmission network.

Optionally, the method may further include: receiving a third packet sent by the second end-side device, where the third packet includes a second application-aware identifier; and sending, to the second end-side device based on that the third packet includes the second application-aware identifier, a fourth packet in which the second application-aware identifier is encapsulated.

Optionally, the first application-aware identifier may be randomly allocated by the controller, or is dynamically updated by the controller.

According to a third aspect, a packet sending method is provided, applied to a network edge device. A first end-side device is connected to a network device in the middle of the network by using the network edge device, and the network device in the middle of the network is further connected to a second end-side device. The method includes: receiving a first packet sent by the first end-side device, where the first packet includes an application-aware identifier; and sending the first packet to the network device in the middle of the network. The first packet is used by the network device in the middle of the network to encapsulate, based on the application-aware identifier, the application-aware identifier in a second packet obtained by processing the first packet, and send the second packet to the second end-side device.

Optionally, the process of sending the first packet to the network device in the middle of the network may include: performing security authentication on the first packet; and sending the first packet to the network device in the middle of the network based on an authentication result of the security authentication.

Security authentication is performed on the first packet, to effectively ensure security of the first packet sent by the network edge device, and ensure packet transmission security.

Optionally, the first packet includes application-aware information that carries the application-aware identifier, the application-aware information further includes a security level, and the process of performing security authentication on the first packet may include: obtaining an authentication algorithm corresponding to the security level; and performing security authentication on the first packet based on the authentication algorithm.

For different security levels, different authentication algorithms are configured in the network edge device. Therefore, flexibility and reliability of performing security authentication on the first packet are effectively improved.

Optionally, the process of performing security authentication on the first packet may include: searching for an authentication entry based on traffic information of a service flow to which the first packet belongs and/or the application-aware identifier, to obtain the authentication result.

The authentication entry is searched for, to quickly authenticate the first packet, effectively improve security authentication efficiency, and further ensure transmission efficiency of the first packet.

Optionally, the first packet includes application-aware information that carries the application-aware identifier, and the application-aware information further includes verification information; and the process of performing security authentication on the first packet may include: processing the application-aware identifier based on a verification algorithm, to obtain authentication information; and verifying the authentication information based on the verification information, to obtain the authentication result. The verification information may be encrypted information, to ensure security.

Optionally, the application-aware identifier in the first packet is an encrypted identifier, and the process of performing security authentication on the first packet may include: decrypting the application-aware identifier. If decryption succeeds, the authentication result is that authentication succeeds; or if decryption fails, the authentication result is that authentication fails.

Optionally, the process of sending the first packet to the network device in the middle of the network based on an authentication result of the security authentication may include: sending the first packet to the network device in the middle of the network if the authentication result is that authentication succeeds; and the method further includes: discarding the first packet if the authentication result is that authentication fails.

If the authentication result is that authentication fails, the network edge device may determine that the first packet is untrusted, and therefore may discard the first packet, to ensure security.

Optionally, the process of sending the first packet to the network device in the middle of the network based on an authentication result of the security authentication may include: if the authentication result is that authentication succeeds, sending, to the network device in the middle of the network, a first packet in which a trust flag is set; or if the authentication result is that authentication fails, sending, to the network device in the middle of the network, a first packet in which a trust flag is not set.

Based on the implementation, a device (for example, the network device in the middle of the network or the second end-side device) that subsequently receives the first packet can determine, based on the trust flag, whether to trust the first packet. In addition, for a packet whose authentication fails, the network edge device may choose to perform another forwarding operation other than packet discarding. For example, the network edge device may perform a common forwarding operation, or may perform a rate-limited forwarding operation. In addition, when authentication performed on the first packet fails due to an unexpected situation, a network resource can be protected, and service interruption can be avoided.

According to a fourth aspect, a packet sending method is provided, applied to a first device. The method includes: receiving a first packet sent by a second device, where the first packet includes an application-aware identifier; and sending, to the second device based on that the first packet includes the application-aware identifier, a second packet in which the application-aware identifier is encapsulated.

Optionally, the first packet includes application-aware information, and the aware information includes the application-aware identifier; and the process of sending, to the second device based on that the first packet includes the application-aware identifier, a second packet in which the application-aware identifier is encapsulated may include:
sending, to the second device based on that the first packet includes the application-aware identifier and the application-aware information meets a target condition, the second packet in which the application-aware identifier is encapsulated, where the target condition includes one of the following conditions: a reflect flag in the application-aware information is set; a refresh flag in the application-aware information is set; and a mark flag in the application-aware information is different from a mark flag recorded in the first device.

The first device and the second device each may be an end-side device. For example, the first device may be a terminal, and the second device may be a server. Alternatively, one of the first device and the second device is an end-side device, and the other is a network device in the middle of the network. For example, the first device may be a terminal, and the second device may be a network device in the middle of the network; or the first device may be a network device in the middle of the network, and the second device may be a server.

According to a fifth aspect, a packet sending method is provided, applied to an end-side device or a network device in the middle of the network. The method includes: receiving an encapsulation rule delivered by a controller; and if a service flow to which a to-be-sent packet belongs satisfies the encapsulation rule, encapsulating an application-aware identifier in the packet, and sending the packet.

The encapsulation rule includes traffic identification information and application information. Correspondingly, that the service flow to which the to-be-sent packet belongs satisfies the encapsulation rule may mean that: flow information of the service flow to which the packet belongs matches the traffic identification information. The process of encapsulating an application-aware identifier in the packet may include: encapsulating the application-aware identifier in the packet based on the application information.

Optionally, the end-side device may be a terminal, a server, a virtual machine, a container, or the like; or may be another deployment form or device type of an application client. The network device in the middle of the network may be a load balancer, a reverse agent device, a NAT device, or the like.

According to a sixth aspect, a packet sending method is provided, applied to a source end device. The method includes: sending a detection packet to a destination end device, where the detection packet includes application-aware information, and the detection packet is used by the destination end device to feed back a response packet; and
determining, based on the response packet, whether a transmission network between the source end device and the destination end device supports to transmit a packet that carries the application-aware information.

The source end device may be an end-side device, for example, may be a terminal or a server. The destination end device may be a network device, for example, may be an edge device (also referred to as an access gateway) of an access network. Alternatively, the source end device and the destination end device each may be an end-side device. For example, the source end device may be a terminal, and the destination end device may be a server.

According to a seventh aspect, a packet sending method is provided, applied to a network edge device. The method includes: receiving a packet sent by an end-side device, where the packet includes an application-aware identifier; and performing security authentication on the packet, and sending the packet based on an authentication result of security authentication.

Optionally, application-aware information in the packet includes a security level, and the process of performing security authentication on the packet may include: obtaining an authentication algorithm corresponding to the security level; and performing security authentication on the packet based on the authentication algorithm.

Alternatively, the process of performing security authentication on the packet may include: searching for an authentication entry based on traffic information of a service flow to which the packet belongs and/or the application-aware identifier, to obtain the authentication result.

Alternatively, application-aware information in the packet includes verification information; and the process of performing security authentication on the packet may include: processing the application-aware identifier based on a verification algorithm, to obtain authentication information; and verifying the authentication information based on the verification information, to obtain the authentication result.

Alternatively, the application-aware identifier in the packet is an encrypted identifier, and the process of performing security authentication on the packet may include: decrypting the application-aware identifier. If decryption succeeds, the authentication result is that authentication succeeds; or if decryption fails, the authentication result is that authentication fails.

Optionally, the network edge device may be an edge device in an access network, a backbone network, or an access zone of a data center network, and the edge device may be a network device having a packet forwarding function, for example, a router or a switch.

According to an eighth aspect, a packet sending device is provided. A network device may be an end-side device, a network device in the middle of the network, or a network edge device in a packet sending system. The packet sending device includes at least one module, and the at least one module may be configured to implement the method provided in any one of the foregoing aspects.

According to a ninth aspect, a packet sending device is provided. A network device may be an end-side device, a network device in the middle of the network, or a network edge device in a packet sending system. The packet sending device includes a memory, a processor, and a computer program that is stored in the memory and that may be run on the processor. When executing the computer program, the processor implements the method provided in any one of the foregoing aspects.

According to a tenth aspect, a packet sending device is provided. A network device may be an end-side device, a network device in the middle of the network, or a network edge device in a packet sending system. The packet sending device may include a main control board and an interface board. The main control board and the interface board may be configured to implement the method provided in any one of the foregoing aspects.

According to an eleventh aspect, a computer-readable storage medium is provided. The computer-readable storage medium stores instructions, and the instructions are executed by a processor, to implement the method provided in any one of the foregoing aspects.

According to a twelfth aspect, a computer program product including instructions is provided. When the instructions are run on a processor, the processor is enabled to perform the method provided in any one of the foregoing aspects.

According to a thirteenth aspect, a packet sending system is provided. The packet sending system includes a first end-side device, a second end-side device, and network device in the middle of the network that is separately connected to the first end-side device and the second end-side device. The network device in the middle of the network is configured to implement the method provided in the first aspect, and the first end-side device is configured to implement the method provided in the second aspect.

Optionally, the packet transmission system further includes a network edge device. The first end-side device is connected to the network device in the middle of the network by using the network edge device, and the network edge device is configured to implement the method provided in the third aspect.

Optionally, the first end-side device, the second end-side device, and the network device in the middle of the network may further implement the method provided in the fourth aspect. The first end-side device and the second end-side device may further implement the method provided in the fifth aspect or the sixth aspect, and the network edge device may further implement the method provided in the sixth aspect or the seventh aspect.

According to a fourteenth aspect, a chip is provided. The chip may be configured to implement the method provided in any one of the foregoing aspects.

In conclusion, this application provides a packet sending method, an apparatus, and a system. In the solutions provided in this application, after receiving the first packet that is sent by the first end-side device and in which the first application-aware identifier is encapsulated, the network device in the middle of the network can encapsulate the first application-aware identifier in the second packet obtained by processing the first packet. Then, the network device in the middle of the network can send the second packet to the second end-side device. Therefore, it may be ensured that a packet that carries application-aware information can be normally transmitted in a plurality of connections. In addition, it may be further ensured that both the first packet transmitted between the first end-side device and the network device in the middle of the network and the second packet transmitted between the network device in the middle of the network and the second end-side device include a same first application-aware identifier. Further, it may be ensured that both a transmission link between the first end-side device and the network device in the middle of the network and a transmission link between the network device in the middle of the network and the second end-side device can provide, based on the first application-aware identifier, a refined network service for the service flow to which the first packet belongs.

### BRIEF DESCRIPTION OF DRAWINGS

FIG. 1 is a schematic diagram of an application scenario of a packet sending method according to an embodiment of this application;
FIG. 2 is a schematic diagram of a data structure of an APN option according to an embodiment of this application;
FIG. 3 is a schematic diagram of a data structure of an application-aware identifier according to an embodiment of this application;
FIG. 4 is a schematic diagram of a data structure of a service parameter option according to an embodiment of this application;
FIG. 5 is a schematic diagram of a data structure of an APN parameter field according to an embodiment of this application;
FIG. 6 is a flowchart of a packet sending method according to an embodiment of this application;
FIG. 7A and FIG. 7B are a flowchart of another packet sending method according to an embodiment of this application;
FIG. 8 is a schematic diagram of a structure of a packet sending system according to an embodiment of this application;
FIG. 9 is a schematic diagram of a data structure of a detection packet according to an embodiment of this application;
FIG. 10 is a schematic diagram of a structure of an end-side device according to an embodiment of this application;
FIG. 11 is a schematic diagram of a data structure of a first packet according to an embodiment of this application;
FIG. 12 is a schematic diagram of a data structure of another first packet according to an embodiment of this application;
FIG. 13 is a schematic diagram of a structure of another packet sending system according to an embodiment of this application;
FIG. 14 is a schematic diagram of a data structure of a third packet according to an embodiment of this application;
FIG. 15 is a flowchart of still another packet sending method according to an embodiment of this application;
FIG. 16 is a flowchart of yet another packet sending method according to an embodiment of this application;
FIG. 17 is a flowchart of still yet another packet sending method according to an embodiment of this application;
FIG. 18 is a flowchart of a further packet sending method according to an embodiment of this application;
FIG. 19 is a schematic diagram of a structure of a network device in the middle of the network according to an embodiment of this application;
FIG. 20 is a schematic diagram of a structure of a first end-side device according to an embodiment of this application;
FIG. 21 is a schematic diagram of a structure of a network edge device according to an embodiment of this application;
FIG. 22 is a schematic diagram of a structure of a packet sending device according to an embodiment of this application; and
FIG. 23 is a schematic diagram of a structure of another packet sending device according to an embodiment of this application.

### DESCRIPTION OF EMBODIMENTS

The following describes in detail a packet sending method, an apparatus, and a system provided in embodiments of this application with reference to accompanying drawings.

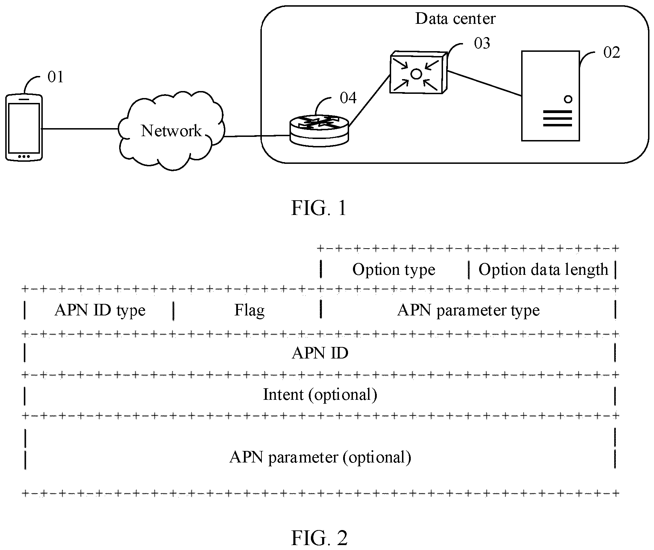

FIG. 1 is a schematic diagram of an application scenario of a packet sending method according to an embodiment of this application. As shown in FIG. 1, the application scenario may include a first end-side device 01, a second end-side device 02, and a network device in the middle of the network 03 configured to connect the first end-side device 01 and the second end-side device 02. One of the first end-side device 01 and the second end-side device 02 may be a terminal, and the other may be a server; or both end-side devices may be servers. The network device in the middle of the network 03 may be a load balancer, a reverse agent device, a NAT device, or the like. In addition, the network device in the middle of the network 03 may be a router, a switch, a server, a virtual machine, a container, or the like that has a load balancing function, a reverse agent function, or a NAT function.

Optionally, as shown in FIG. 1, the application scenario may further include a network edge device 04, and the first end-side device 01 may be connected to the network device in the middle of the network 03 by using the network edge device 04. For example, as shown in FIG. 1, if both the second end-side device 02 and the network device in the middle of the network 03 are deployed in a data center, the network edge device 04 may be an edge device in an access zone of the data center, or may be referred to as an access gateway. Alternatively, the network edge device 04 may be an edge device of an access network or a backbone network. In addition, the edge device may be a network device having a packet forwarding function, for example, a router or a switch.

In this embodiment of this application, a packet exchanged between the first end-side device 01 and the second end-side device 02 may carry application-aware information. In other words, the network shown in FIG. 1 may be an APN network. The application-aware information may be carried in an extension header of an IPv6 packet. The extension header may be a hop-by-hop options header (hop-by-hop options header, HBH), a destination options header (destination options header, DOH), a routing header (routing header, RH), or another IPv6 extension header and a TLV extensible sub-option thereof. In addition, the application-aware information may be carried in an APN option (APN Option). As shown in FIG. 2, the APN option may include the following fields: an option type (option type, Opt Type) field, an option data length (option data length, Opt data Len) field, an APN ID type field, a flag (flags) field, an APN parameter type (APN parameter type, APN-Para-Type) field, an APN ID field, an intent (intent) field, and an APN parameter field. The intent field and the APN parameter field are optional (optional) fields.

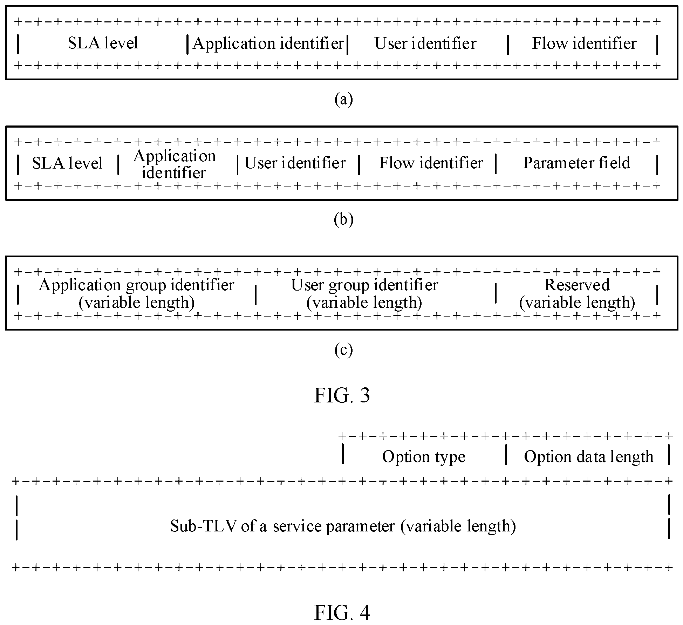

FIG. 3 shows several data formats of an APN ID. As shown in (a) in FIG. 3, the APN ID may include information such as an SLA level, an application identifier (identifier, ID), a user ID, and a flow ID. Alternatively, as shown in (b) in FIG. 3, the APN ID may further include an arguments (arguments) field. Alternatively, as shown in (c) in FIG. 3, the APN ID may include an application group ID, a user group ID, and a reserved (reserved) field, and a length of each field is a variable length.

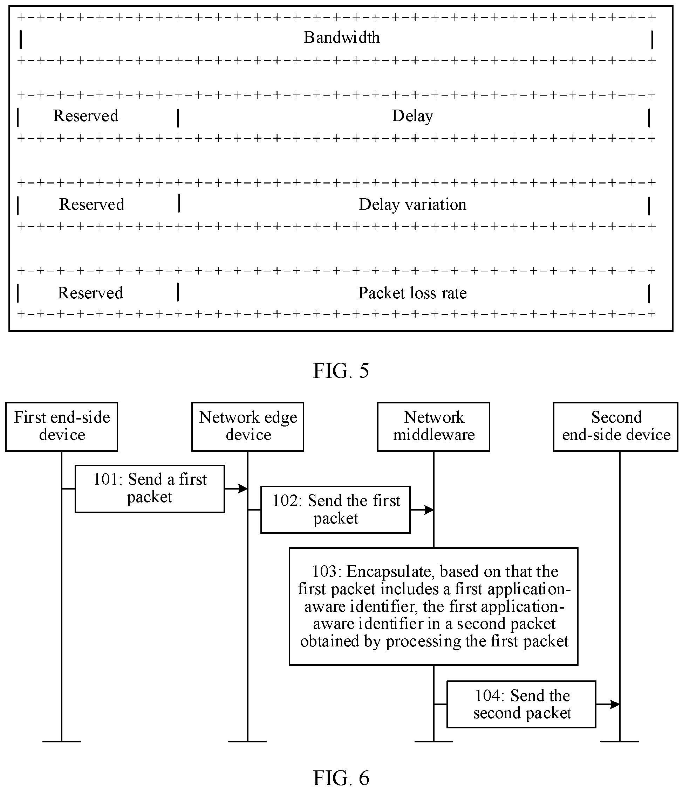

The APN parameter field or a service parameter option (Service-Para Option) in the APN option may carry information such as a network performance parameter, an application status, and application private information. As shown in FIG. 4, the service parameter option may include the following fields: an option type, an option data length, and at least one sub-TLV of a service parameter. As shown in FIG. 5, the network performance parameter carried in the APN parameter field may include a bandwidth (bandwidth), a delay (delay), a delay variation (delay variation), a packet loss rate (packet loss rate), and the like.

FIG. 6 is a flowchart of a packet sending method according to an embodiment of this application. The method may be applied to the application scenario shown in FIG. 1. As shown in FIG. 6, the method includes the following steps.

Step 101: A first end-side device sends a first packet to a network edge device.

In this embodiment of this application, the first end-side device may be a terminal or a server, or may be a container or a virtual machine on which an application client is installed, or the like. The first end-side device may send the first packet to the network edge device. The first packet is a packet to be sent to a second end-side device, and the first packet may be a connection packet or may be a service packet. In addition, the first packet includes a first application-aware identifier (APN ID).

The network edge device may be an edge device of a network in which the second end-side device is located. For example, if the second end-side device is an intranet server of a data center, the network edge device may be an edge device in an access zone of the data center. Alternatively, the network edge device may be an edge device of an access network or a backbone network connected to the first end-side device.

Step 102: The network edge device sends the first packet to a network device in the middle of the network.

After receiving the first packet, the network edge device may forward the first packet to a network device in the middle of the network connected to the second end-side device. The network device in the middle of the network may be a load balancer, a reverse agent device, a NAT device, or the like. For example, if the second end-side device is the intranet server of the data center, the network device in the middle of the network may be a device in a demilitarized zone (demilitarized zone, DMZ) of the data center.

Step 103: The network device in the middle of the network encapsulates, based on that the first packet includes the first application-aware identifier, the first application-aware identifier in a second packet obtained by processing the first packet.

After receiving the first packet that is from the first end-side device and that is forwarded by the network edge device, the network device in the middle of the network may parse an extension header of the first packet, to detect whether the extension header carries an application-aware identifier. If the extension header carries the first application-aware identifier, in a process of processing the first packet to obtain the second packet, the network device in the middle of the network may encapsulate the first application-aware identifier in the second packet. A payload in the second packet is obtained based on a payload in the first packet. For example, the payload in the second packet may be the same as the payload in the first packet.

Optionally, if the network device in the middle of the network is a NAT device or a load balancer, the NAT device may perform network address translation or port translation processing on the first packet, to obtain the second packet.

Alternatively, if the network device in the middle of the network is a load balancer or a reverse agent device, the network device in the middle of the network may split an end-to-end connection between the first end-side device and the second end-side device into two connections. Correspondingly, after receiving the first packet to be sent to the second end-side device, the network device in the middle of the network may obtain the payload in the first packet through parsing, and encapsulate the payload and a target packet header, to obtain the second packet. The target packet header is different from a packet header of the first packet. In addition, N-tuple information in the packet header of the first packet indicates a connection between the first end-side device and the network device in the middle of the network, and N-tuple information in the target packet header indicates a connection between the network device in the middle of the network and the second end-side device. N is an integer greater than 1. For example, N may be equal to 5.

It may be understood that when generating the second packet, the network device in the middle of the network may not need to modify the payload in the first packet. Alternatively, the network device in the middle of the network may update the payload in the first packet. For example, if the first packet is a hypertext transfer protocol (hypertext transfer protocol, HTTP) request, the network device in the middle of the network may add a new HTTP header (header) to the HTTP request.

Step 104: The network device in the middle of the network sends the second packet to the second end-side device.

After processing the first packet and obtaining the second packet in which the first application-aware identifier is encapsulated, the network device in the middle of the network may send the second packet to the second end-side device.

In conclusion, this embodiment of this application provides a packet sending method. After receiving the first packet that is sent by the first end-side device and in which the first application-aware identifier is encapsulated, the network device in the middle of the network can encapsulate the first application-aware identifier in the second packet obtained by processing the first packet. Then, the network device in the middle of the network can send the second packet to the second end-side device. Therefore, it may be ensured that a packet that carries application-aware information can be normally transmitted in a plurality of connections. In addition, it may be further ensured that both the first packet transmitted between the first end-side device and the network device in the middle of the network and the second packet transmitted between the network device in the middle of the network and the second end-side device include a same first application-aware identifier. Further, it may be ensured that both a transmission link between the first end-side device and the network device in the middle of the network and a transmission link between the network device in the middle of the network and the second end-side device can provide, based on the first application-aware identifier, a refined network service for the service flow to which the first packet belongs.

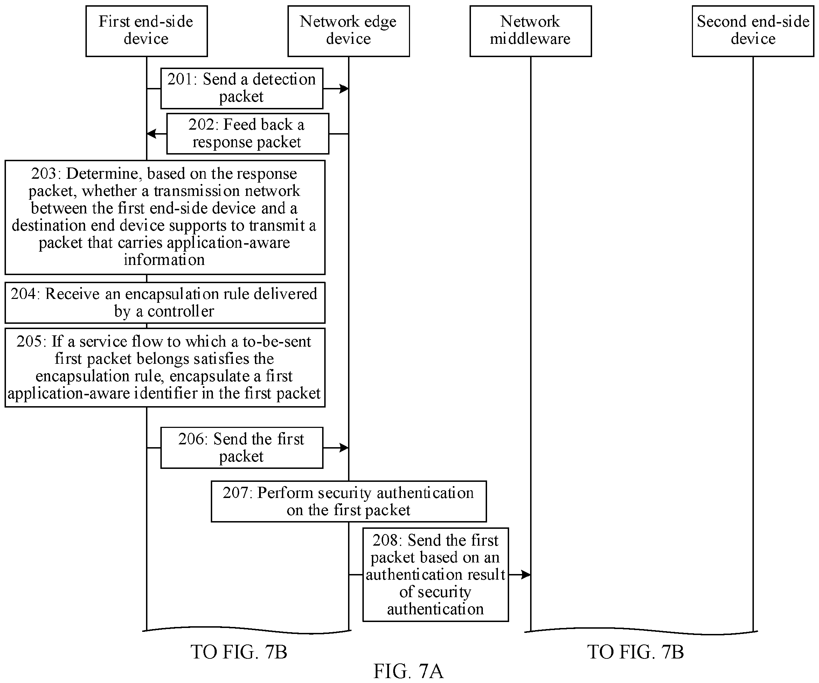

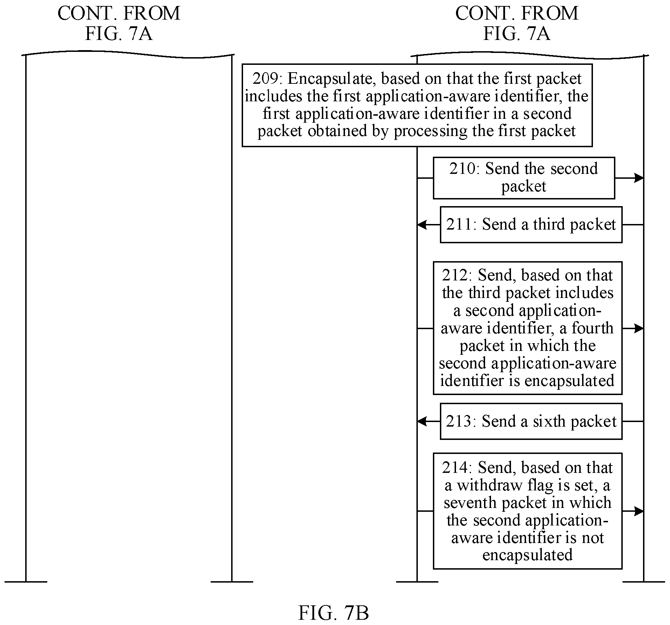

FIG. 7A and FIG. 7B are a flowchart of a packet sending method according to an embodiment of this application. The method may be applied to the application scenario shown in FIG. 1. In this application scenario, a first end-side device may be a terminal or a server, or may be a container or a virtual machine on which an application client is installed, or the like. A second end-side device may be a server, a server cluster, or a cloud server. A network device in the middle of the network may be a load balancer, a reverse agent device, a NAT device, or the like. A network edge device may be an edge device in an access network, a backbone network, or an access zone of a data center. As shown in FIG. 7A and FIG. 7B, the method includes the following steps.

Step 201: The first end-side device sends a detection packet to a destination end device, where the detection packet includes application-aware information.

If an end-to-end communication path between the first end-side device and the second end-side device needs to pass through a third-party network (for example, a public internet or a mobile network), a packet loss of a packet that carries the application-aware information may occur in the third-party network, and communication quality or connectivity of an APN-related service is affected. In this embodiment of this application, the first end-side device may send the detection packet that carries the application-aware information, to detect whether the third-party network supports the packet that carries the application-aware information.

If the first end-side device determines that the third-party network supports to transmit the packet that carries the application-aware information, the first end-side device may use a subsequently sent packet to carry the application-aware information. In other words, the first end-side device may enable an APN function. If the first end-side device determines that the third-party network does not support to transmit the packet that carries the application-aware information, the first end-side device does not need to use a subsequently sent packet to carry the application-aware information. In other words, the first end-side device may disable the APN function.

It may be understood that a transmission path between the first end-side device and the destination end device passes through the third-party network, and the first end-side device may also be referred to as a source end device. The source end device may be an end-side device such as a terminal or a server, and the destination end device may be a network device, for example, may be a network edge device of a network in which the second end-side device is located. Alternatively, the source end device and the destination end device each may be an end-side device. For example, the source end device may be a terminal, and the destination end device may be a server.

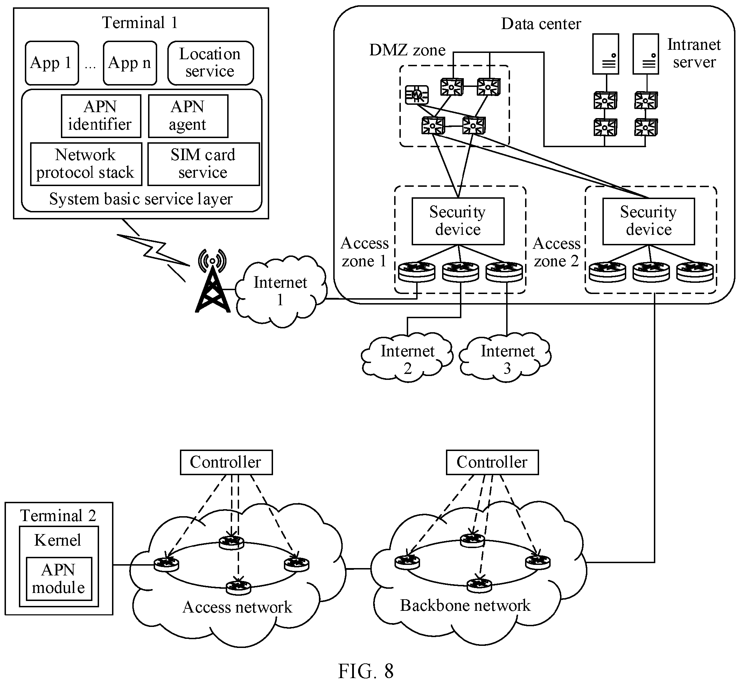

FIG. 8 is a schematic diagram of a structure of a packet sending system according to an embodiment of this application. As shown in FIG. 8, it is assumed that the first end-side device is a terminal 1, the second end-side device is an intranet server of the data center, and the terminal 1 accesses the data center by using a network edge device (that is, an access gateway) in an access zone 1. Because an end-to-end communication path between the terminal 1 and the intranet server needs to pass through the third-party network: the mobile network and an internet 1, the terminal 1 may send, to the network edge device in the access zone 1, a detection packet that carries application-aware information, to detect whether the third-party network supports a packet that carries the application-aware information.

Optionally, the detection packet sent by the first end-side device may meet at least one of the following conditions:
Condition 1: The application-aware information includes a detection flag.

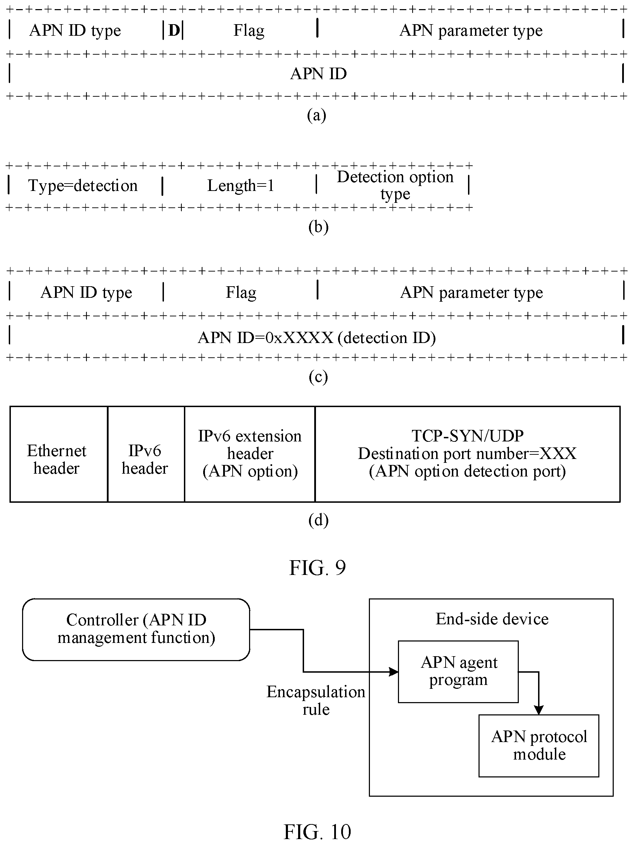

For example, as shown in (a) in FIG. 9, a detection (detect) flag D may be newly added to an APN option of the detection packet, and the detection flag indicates that a function of the application-aware information in the detection packet is detection. It can be learned from (a) in FIG. 9 that the first end-side device may use 1 bit in a flag (flags) field as the detection flag D.

Condition 2: The detection packet further includes a detection option.

The detection option is an option field parallel to the APN option, and indicates that a function of the APN option is detection. As shown in (b) in FIG. 9, the detection option may include a type field, a length field, and a detection option type field. A value of the type field may be detection (detect), a value of the length field may be 1, and indicates that a length of the detection option type field is 1 byte, and a value of the detection option type field may be the same as a value of the option type field in the APN option.

Condition 3: An application-aware identifier in the application-aware information is a detection identifier indicating detection.

In this embodiment of this application, a specific application-aware identifier (APN ID) may be predefined in the packet sending system, to be used as a detection identifier dedicated to indicating detection. As shown in (c) in FIG. 9, the application-aware information in the detection packet may carry a specific application-aware identifier 0xXXXX. Herein, 0x indicates a hexadecimal number.

Condition 4: A destination port number of the detection packet is a detection port number used for detection.

In this embodiment of this application, a specific layer 4 (layer 4, L4) port number may be predefined in the packet sending system, to be used as a detection port number dedicated to indicating detection. As shown in (d) in FIG. 9, the detection packet may be a transmission control protocol (transmission control protocol, TCP) synchronous (synchronous, SYN) packet, or may be a user datagram protocol (user datagram protocol, UDP) packet, and the destination port number (destination port) of the packet is a specific detection port number XXX. It can be further learned from (d) in FIG. 9 that, the detection packet further includes an Ethernet (Ethernet) header, an IPv6 header, and an IPv6 extension header, and the IPv6 extension header includes an APN option.

Condition 5: The detection packet is an ICMPv6 packet.

Because the ICMPv6 packet is a packet used for detection (similar to detection performed by using a ping program), an ICMPv6 packet in which application-aware information is encapsulated may be used as the detection packet. Herein, ping is a packet internet groper (packet internet groper).

Step 202: The destination end device feeds back a response packet to the first end-side device.

In this embodiment of this application, the destination end device may feed back the response packet to the first end-side device based on a receiving status of the destination end device for the detection packet.

In a first possible implementation, the response packet may be a detection packet. To be specific, if the destination end device receives the detection packet, the detection packet may be directly used as the response packet and fed back to the first end-side device.

In a second possible implementation, the response packet may be a packet that is constructed after the destination end device receives the detection packet and that carries the application-aware information, and the application-aware information in the response packet may be the same as the application-aware information in the detection packet.

It may be understood that, in the two implementations, if the destination end device does not receive the detection packet, the destination end device does not feed back the response packet to the first end-side device.

In a third possible implementation, the response packet may not include the application-aware information, but may be an indication packet indicating whether the destination end device receives the detection packet. Correspondingly, in this implementation, even if the destination end device does not receive the detection packet, the destination end device feeds back the response packet to the first end-side device.

For example, the first end-side device and the destination end device may simultaneously start a detection function after performing detection negotiation. The first end-side device enables the detection function to send the detection packet to the destination end device. After enabling the detection function, the destination end device may start timing, and detect whether the destination end device receives the detection packet within preset waiting duration. If the destination end device receives the detection packet within the waiting duration, the destination end device may send, to the first end-side device, a response packet indicating that the detection packet is received. If the destination end device does not receive the detection packet within the waiting duration, the destination end device may send, to the first end-side device, a response packet indicating that the detection packet is not received.

Step 203: The first end-side device determines, based on the response packet, whether a transmission network between the first end-side device and the destination end device supports to transmit the packet that carries the application-aware information.

If the response packet received by the first end-side device carries the application-aware information, or if the response packet received by the first end-side device indicates that the destination end device has received the detection packet, the first end-side device may determine that the transmission network supports to transmit the packet that carries the application-aware information. Correspondingly, the first end-side device may use, to carry the application-aware information, a packet to be sent to the second end-side device subsequently. In other words, the first end-side device may enable the APN function.

If the response packet received by the first end-side device does not carry the application-aware information, or if the response packet received by the first end-side device indicates that the destination end device does not receive the detection packet, or if the response packet is not received within the waiting duration, the first end-side device may determine that the transmission network does not support to transmit the packet that carries the application-aware information. Correspondingly, the first end-side device does not need to use, to carry the application-aware information, the packet to be sent to the second end-side device subsequently. In other words, the first end-side device may disable the APN function.

It may be understood that, in step 201 to step 203, the first end-side device may send the detection packet in a flow. In other words, the detection packet may be a service packet of a service flow. For example, the first end-side device may use, as the detection packet, a service packet that meets Condition 1 or Condition 2. Alternatively, the first end-side device may send the detection packet in a band. In other words, the first end-side device may construct the detection packet dedicated to detection. The constructed detection packet has a destination address or a 5-tuple the same as that of the service packet, so that a forwarding path of the detection packet in the network is the same as that of the service packet.

It may be further understood that the method shown in step 201 to step 203 may be further used to detect whether the transmission network supports another type of IPv6 extension header, for example, detect whether the transmission network supports an extension header such as an HBH, a DOH, or an RH and an option, TLV, and the like that may be carried in the extension header.

Step 204: The first end-side device receives an encapsulation rule delivered by a controller.

In this embodiment of this application, a controller having an APN ID management function may deliver an APN ID encapsulation rule to the first end-side device. The controller may be a network controller, or may be a management or control program dedicated to implementing the APN ID management function.

The encapsulation rule may be delivered in a plurality of manners. The plurality of manners include but are not limited to a message queue, a RESTful application programming interface (application programming interface, API), a gRPC, Dubbo, Linux sysfs, Linux procfs, a netlink, input/output control (input/output control, ioctl), and the like. RESTful is a design style and a development manner of a network application, and REST represents a representational state transfer (representational state transfer). gRPC is a remote procedure call (remote procedure call, RPC) protocol. Dubbo is a service framework, and can provide interface-oriented remote method invocation, intelligent fault tolerance, load balancing, and automatic service registration and discovery. sysfs is a memory-based file system (file system). A function of sysfs is to provide, by using a file, kernel information to a user program for use. sysfs is usually used to configure a kernel and view configuration information. procfs is a process file system (process file system), and is usually used to view a working status of the kernel and configuration information.

Step 205: If a service flow to which a to-be-sent first packet belongs satisfies the encapsulation rule, the first end-side device encapsulates the first application-aware identifier in the first packet.

After receiving the encapsulation rule, the first end-side device may detect whether the service flow to which the to-be-sent first packet belongs satisfies the encapsulation rule. If the encapsulation rule is satisfied, the first end-side device may encapsulate the application-aware information in the first packet. The application-aware information includes the first application-aware identifier. If the service flow to which the first packet belongs does not satisfy the encapsulation rule, the first end-side device does not need to encapsulate the first application-aware identifier in the first packet. In other words, the first end-side device does not need to encapsulate the application-aware information.

Optionally, the encapsulation rule may include traffic identification information and application information. Correspondingly, in step 205, if the first end-side device detects that flow information of the service flow to which the first packet belongs matches the traffic identification information, the first end-side device may determine that the service flow to which the first packet belongs satisfies the encapsulation rule. Then, the first end-side device may encapsulate the first application-aware identifier in the first packet based on the application information.

The traffic identification information may include at least one piece of the following information: a source media access control (media access control, MAC) address, a destination MAC address, a virtual local area network (virtual local area network, VLAN) ID, a source IP address, a destination IP address, a protocol number, a source port number, a destination port number, an application name, an app application package name, a differentiated services code point (differentiated services code point, DSCP), a priority code point (priority code point, PCP), another priority field, or the like.

The application information may include the first application-aware identifier (APN ID), or in addition to the first application-aware identifier, may further include other APN-related information. The other APN-related information may be an APN ID type and information that can be carried in the APN option. The encapsulation rule includes the application information, so that the first end-side device can encapsulate, in the first packet, application-aware information specified by the controller, for example, encapsulate a specified APN ID.

For example, as shown in FIG. 10, an APN agent program and an APN protocol module may be deployed in the first end-side device, or the APN agent program and the APN protocol module may be integrated into one module. The APN agent program can be connected to the controller having the APN ID management function, and may receive the encapsulation rule delivered by the controller. The encapsulation rule may also be referred to as an APN ID policy or an APN traffic rule. Then, the APN agent program may convert the encapsulation rule, to obtain an encapsulation rule that may be executed by the APN protocol module, and deliver the encapsulation rule to the APN protocol module. "Conversion" may be converting a data format. Because interface types of the APN agent program and the APN protocol module are different, conversion needs to be performed. It may be understood that, if the APN agent program and the APN protocol module are integrated, the conversion step may be omitted.

After receiving the encapsulation rule delivered by the APN agent program, the APN protocol module may detect, based on the encapsulation rule, whether each packet to be sent by the first end-side device matches the encapsulation rule. If matching succeeds, the APN protocol module performs APN-related processing, for example, may insert or encapsulate a specified APN option in the packet based on the application information in the encapsulation rule, and use the APN option to carry a specified APN ID and/or other APN-related information.

For example, as shown in FIG. 8, if the first end-side device is a terminal 1, the first end-side device may include a system basic service layer and a location service, and a total of n applications (application, APP) from an app 1 to an app n may run on the first end-side device. Herein, n is an integer greater than or equal to 1. The system basic service layer may include an APN identification module (that is, an APN protocol module), an APN agent (agent) program, a network protocol stack, and a subscriber identification module (subscriber identification module, SIM) card service module. The location service may include a positioning system (locator) and a global navigation satellite system (global navigation satellite system, GNSS).

It may be understood that, if an application in the first end-side device cannot be upgraded to support an APN technology, or if the application does not need to be aware that an APN technology is deployed in the network, based on the conventional technology, the first end-side device cannot send a packet that carries application-aware information, or send a packet that carries a specified application-aware identifier. However, in this embodiment of this application, because the APN agent program and the APN protocol module may be deployed in the first end-side device, the packet that carries the application-aware information (or the specified application-aware identifier) may be sent by using the APN agent program and the APN protocol module and based on the encapsulation rule delivered by the controller.

Step 206: The first end-side device sends the first packet to the network edge device.

After encapsulating the first application-aware identifier in the first packet, the first end-side device may send the first packet to the network edge device, so that the network edge device can forward the first packet to the second end-side device.

Step 207: The network edge device performs security authentication on the first packet.

In this embodiment of this application, after receiving the first packet sent by the first end-side device, the network edge device may perform security authentication on the first packet, to ensure security. For example, as shown in FIG. 8, after receiving the first packet transmitted by the terminal 1 through the internet 1, the network edge device (that is, the access gateway) in the access zone 1 of the data center may perform security authentication on the first packet.

In a first possible implementation, the application-aware information in the first packet may further include a security level. The network edge device may obtain an authentication algorithm corresponding to the security level, and perform security authentication on the first packet based on the authentication algorithm.

The network edge device prestores a correspondence between the security level and the authentication algorithm. Different security levels in the correspondence correspond to different authentication algorithms. After receiving the first packet, the network edge device may search the correspondence for the authentication algorithm corresponding to the security level in the first packet. The authentication algorithm may be a verification algorithm, an encryption algorithm, a decryption algorithm, or the like. In addition, if the authentication algorithm further requires information such as a key or a keychain (Keychain), the network edge device may further obtain information such as a corresponding key or key string from the correspondence.

Based on this, different security levels may be flexibly selected for different enterprises or applications based on a requirement. Correspondingly, the network edge device may perform security authentication on the first packet based on authentication algorithms of different strength. The security level may be determined through protocol negotiation or service subscription.

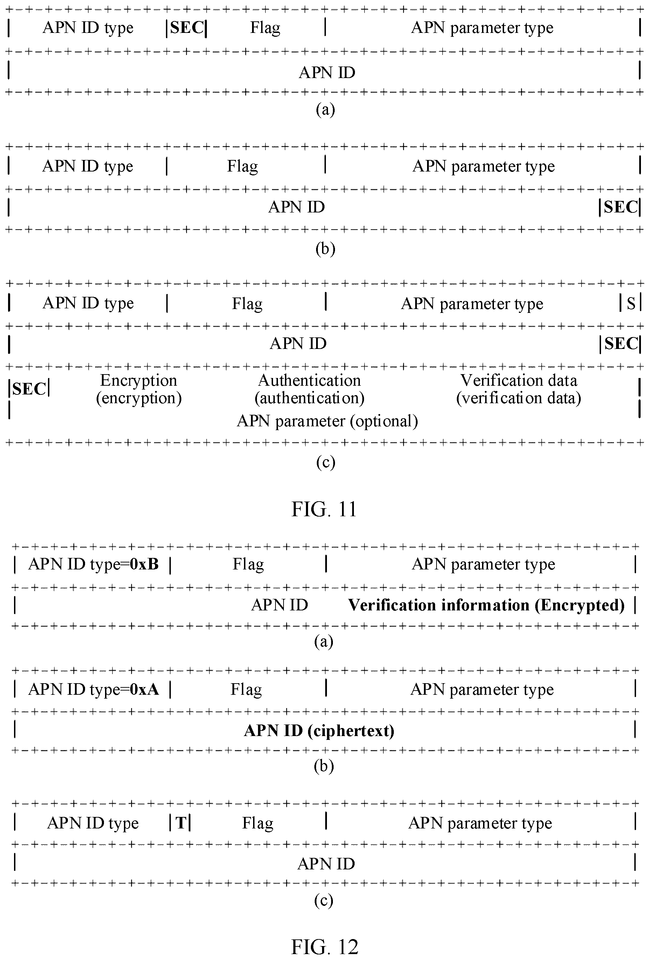

For example, as shown in (a) in FIG. 11, the flag (flags) field in the application-aware information in the first packet may carry the security level SEC. Alternatively, as shown in (b) in FIG. 11, the APN ID field in the application-aware information in the first packet may carry the security level SEC. Alternatively, as shown in (c) in FIG. 11, the APN parameter field in the application-aware information in the first packet may carry the security level SEC. As shown in (c) in FIG. 11, the APN parameter field in the application-aware information may further carry encryption (encryption), authentication (authentication), and verification data (authentication data), and a flag S of the APN parameter type field may indicate that the APN parameter field carries the foregoing data.

In a second possible implementation, the network edge device may search for an authentication entry based on traffic information of a service flow to which the first packet belongs and/or the first application-aware identifier, to obtain the authentication result. The traffic information may include an N-tuple of the service flow and/or access authentication identification information. The access authentication identification information may include a port number, a VLAN ID, a session (session) ID, or the like.

In a possible example, the network edge device may search for the authentication entry based on the traffic information, to determine whether a user or a session to which the service flow belongs is allowed to use the APN function. In other words, the authentication result may be that the APN function is allowed (that is, authentication succeeds), or the APN function is denied (that is, authentication fails).

In another possible example, the network edge device may search for the authentication entry based on the traffic information and the first application-aware identifier (or an ID number segment to which the first application-aware identifier belongs), to obtain the authentication result. The authentication result may include: the APN function is allowed (allow), the APN function is allowed by default, the APN function is denied (deny), or the APN function is denied by default.

In this example, the authentication entry may be an access control list (access control lists, ACL), and may include a whitelist entry and/or a blacklist entry. In a scenario in which the authentication entry includes the whitelist entry, if the traffic information of the first packet and a first application-aware message match any entry in the whitelist entry, the network edge device may determine that the authentication result is that the APN function is allowed. If the traffic information of the first packet and a first application-aware message match no entry in the whitelist entry, the network edge device may determine that the authentication result is that the APN function is denied.

In a scenario in which the authentication entry includes the blacklist entry, if the traffic information of the first packet and a first application-aware message match any entry in the blacklist entry, the network edge device may determine that the authentication result is that the APN function is denied. If the traffic information of the first packet and a first application-aware message match no entry in the blacklist entry, the network edge device may determine that the authentication result is that the APN function is allowed.

In a scenario in which the authentication entry includes the whitelist entry and the blacklist entry, if the traffic information of the first packet and a first application-aware message match any entry in the whitelist entry, the network edge device may determine that the authentication result is that the APN function is denied. If the traffic information of the first packet and a first application-aware message match any entry in the blacklist entry, the network edge device may determine that the authentication result is that the APN function is denied. If the traffic information of the first packet and a first application-aware message match no entry in the whitelist entry and match no entry in the blacklist entry, the network edge device may determine that the authentication result is that the APN function is allowed by default, or the APN function is denied by default.

It may be understood that the whitelist entry and the blacklist entry may be delivered by the controller to the corresponding network edge device when the controller allocates an APN ID to a terminal, an application, or a user.

In a third possible implementation, the application-aware information in the first packet may further include verification information. The network edge device may process the first application-aware identifier based on the verification algorithm, to obtain authentication information, and then may verify the authentication information based on the verification information, to obtain the authentication result. In this implementation, the first application-aware identifier in the application-aware information may be a plaintext identifier.

For example, as shown in (a) in FIG. 12, the APN ID field in the application-aware information may carry the verification information, and the verification information may be unencrypted information, or may be encrypted information. If the verification information is encrypted information, the network edge device may first decrypt the verification information. The network edge device prestores a template of the APN ID field, and the template can indicate an arrangement sequence and a length of the APN ID and the verification information. For example, if a length of the APN ID field is X bits, the template may indicate that first A bits in the X bits are the APN ID, and last B bits are the verification information. After receiving the first packet, the network edge device may identify the first application-aware identifier and the corresponding verification information based on the template.

It may be understood that, in addition to the three manners, the network edge device may further perform security authentication on the first packet in another manner. For example, as shown in (b) in FIG. 12, the APN ID field in the application-aware information may carry an encrypted APN ID. In other words, the first application-aware identifier in the first packet is a ciphertext. Correspondingly, the network edge device may decrypt the encrypted first application-aware identifier based on a preconfigured decryption algorithm. If decryption succeeds, the network edge device may determine that the authentication result of the security authentication is that authentication succeeds; or if decryption fails, the network edge device may determine that the authentication result of the security authentication is that authentication fails.

Alternatively, the network edge device may directly verify the first application-aware identifier based on a prestored verification algorithm. If verification succeeds, it may be determined that the authentication result is that authentication succeeds; or if verification fails, it may be determined that the authentication result is that authentication fails.

It can be learned from a comparison between (a) and (b) in FIG. 12 that an APN ID type field may indicate a type of the APN ID carried in the APN ID field. For example, if a value of the APN ID type field is 0xB, it may indicate that the APN ID field carries a plaintext APN ID and encrypted verification information. If a value of the APN ID type field is 0xA, it may indicate that the APN ID field carries the encrypted APN ID.

Step 208: The network edge device sends the first packet to the network device in the middle of the network based on the authentication result of security authentication.

In this embodiment of this application, after obtaining the authentication result of the first packet, the network edge device may send the first packet to the network device in the middle of the network based on the authentication result. For example, as shown in FIG. 8, the network edge device in the access zone 1 of the data center may send the first packet to the network device in the middle of the network in the DMZ zone based on the authentication result.

It may be understood that, because a transmission path of the first packet may pass through the third-party network, and the third-party network may parse the application-aware information in the first packet, user privacy disclosure and a security problem are caused. For example, the third-party network may perform correlation analysis on a plurality of packets based on an application-aware identifier, track a session of the user or the application, and perform a targeted attack and interception on a specific user/application/session based on the application-aware identifier. In addition, when a packet is received from the third-party network or an unreliable access line, content of application-aware information in the packet may be forged or counterfeited, and cannot be trusted.

In this embodiment of this application, after receiving the first packet, the network edge device may perform security authentication on the first packet, and then send the first packet to the network device in the middle of the network based on the authentication result of security authentication. Therefore, security and reliability of the sent first packet can be effectively ensured, and user privacy disclosure is avoided.

In a first possible implementation, the network edge device may send the first packet to the network device in the middle of the network if the network edge device determines that the authentication result is that authentication succeeds. If the network edge device determines that the authentication result is that authentication fails, the network edge device may directly discard the first packet. In other words, the network edge device does not send the first packet to the network device in the middle of the network.

In a second possible implementation, if the network edge device determines that the authentication result is that authentication succeeds, the network edge device may send, to the network device in the middle of the network, a first packet in which a trust flag is set. Alternatively, if the network edge device determines that the authentication result is that authentication fails, the network edge device may send, to the network device in the middle of the network, a first packet in which a trust flag is not set.

In this implementation, the trust (trust) flag is further encapsulated in the first packet sent by the network edge device. If the trust flag is set (for example, a value is 1), it may indicate that authentication performed on the first packet succeeds; or if the trust flag is not set (for example, a value is 0), it may indicate that authentication performed on the first packet fails.

For example, as shown in (c) in FIG. 12, a flag field in the application-aware information in the first packet may carry a trust flag T. In addition, it may be understood that the first packet sent by the first end-side device to the network edge device may carry the trust flag, or may not carry the trust flag. If the first packet sent by the first end-side device carries the trust flag, and a value of the trust flag does not match the authentication result of the network edge device, the network edge device may update the value of the trust flag, in other words, remark the trust flag. If a value of the trust flag matches the authentication result of the network edge device, the network edge device does not need to update the trust flag.

Based on the second implementation, a device (for example, the network device in the middle of the network or the second end-side device) that subsequently receives the first packet can determine, based on the trust flag, whether to trust the first packet. In addition, for a packet whose authentication fails, the network edge device may perform another forwarding operation other than packet discarding. For example, the network edge device may perform a common forwarding operation, or may perform a rate-limited forwarding operation. Rate-limited forwarding is performing forwarding at a preset limited rate. Moreover, when authentication performed on the first packet fails due to an unexpected situation, in the foregoing manner, a network resource can be protected, and service interruption can be avoided. The unexpected situation may include: an encryption algorithm or encryption information (for example, a key) recorded in the terminal device is inconsistent with that recorded in the network edge device.

Step 207 and step 208 are described by using an example in which the network edge device performs security authentication on the first packet to ensure security. Optionally, in the method provided in this embodiment of this application, the controller may discretely allocate the application-aware identifier (APN ID) and/or dynamically update the application-aware identifier, to further provide privacy protection and avoid a targeted attack.

Discrete allocation is to randomly allocate an APN ID in an APN ID segment to the terminal/user/application/session. Such a discrete allocation manner is similar to randomly allocating an IP in an IP address segment to a host. Dynamic updating is to dynamically update an APN ID to be used by the terminal/user/application/session, so that the third-party network cannot associate a current data packet with a session based on the APN ID. A dynamic update occasion may include: updating the APN ID each time the app is started, or updating the APN ID at a preset time interval. Starting the app may be opening the app, or that the app receives and responds to an operation.

Step 209: The network device in the middle of the network encapsulates, based on that the first packet includes the first application-aware identifier, the first application-aware identifier in a second packet obtained by processing the first packet.

The network device in the middle of the network may be a load balancer, a reverse agent device, a NAT device, or the like. For example, as shown in FIG. 8, if the second end-side device is an intranet server of the data center, the network device in the middle of the network may be a device in a DMZ zone of the data center.

After receiving the first packet that is from the first end-side device and that is forwarded by the network edge device, the network device in the middle of the network may parse an extension header of the first packet, to detect whether the extension header carries an application-aware identifier. If the extension header carries the first application-aware identifier, in a process of processing the first packet to obtain the second packet, the network device in the middle of the network may encapsulate the first application-aware identifier in the second packet. In addition, a payload in the second packet is obtained based on a payload in the first packet. For example, the payload in the second packet may be the same as the payload in the first packet.

Optionally, if the network device in the middle of the network is a NAT device or a load balancer, the network device in the middle of the network may perform network address translation or port translation processing on the first packet, to obtain the second packet.

Alternatively, if the network device in the middle of the network is a load balancer or a reverse agent device, the network device in the middle of the network may split an end-to-end connection between the first end-side device and the second end-side device into two connections (for example, two TCP connections). Correspondingly, after receiving the first packet to be sent to the second end-side device, the network device in the middle of the network may obtain the payload in the first packet through parsing, and encapsulate the payload and a target packet header, to obtain the second packet. The target packet header is different from a packet header of the first packet. In addition, N-tuple (for example, 5-tuple) information in the packet header of the first packet indicates a connection between the first end-side device and the network device in the middle of the network, and N-tuple information in the target packet header indicates a connection between the network device in the middle of the network and the second end-side device.

Step 210: The network device in the middle of the network sends the second packet to the second end-side device.

After processing the first packet and obtaining the second packet in which the first application-aware identifier is encapsulated, the network device in the middle of the network may send the second packet to the second end-side device.

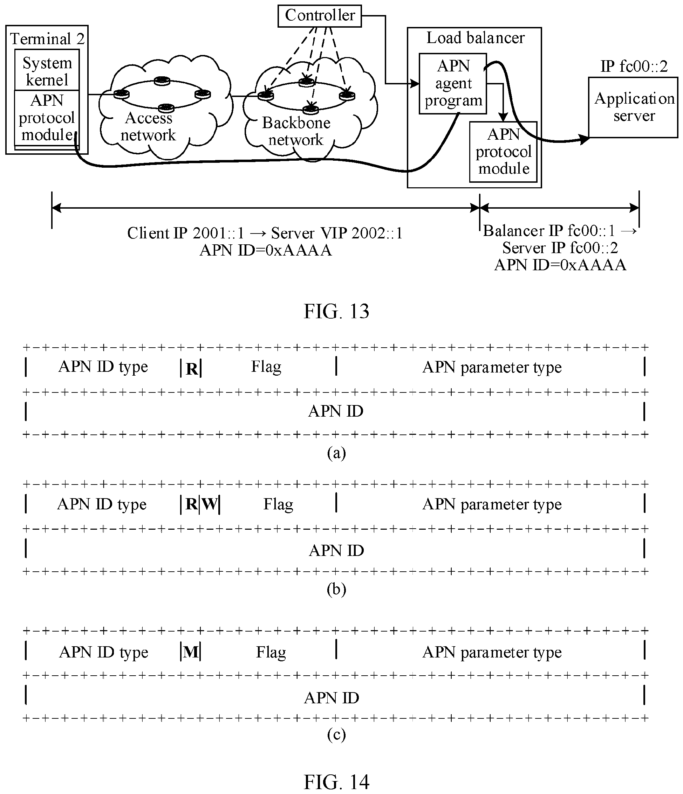

For example, as shown in FIG. 13, if the network device in the middle of the network is a load balancer, the first end-side device is a terminal 2, and the second end-side device is an application server in the data center, a source address in a first packet sent by the terminal 2 to the load balancer may be an IP address 2001::1 of an application client in the terminal 2, and a destination address may be a virtual IP (virtual IP, VIP) address 2002::1 of the application server. In addition, the first packet includes a first application-aware identifier 0xAAAA. Correspondingly, in the second packet obtained by the load balancer by processing the first packet, the source address may be an IP address fc00::1 of the load balancer, and the destination address may be an IP address fc00::2 of the application server. In addition, the second packet includes the first application-aware identifier 0xAAAA.

In the method shown in step 209 and step 210, the network device in the middle of the network may forcibly inherit an application-aware identifier in a received packet. Therefore, it may be ensured that both the first packet transmitted between the first end-side device and the network device in the middle of the network and the second packet transmitted between the network device in the middle of the network and the second end-side device include the first application-aware identifier. Further, it may be ensured that both a transmission link between the first end-side device and the network device in the middle of the network and a transmission link between the network device in the middle of the network and the second end-side device can provide, based on the first application-aware identifier, a refined network service for the service flow to which the first packet belongs.

Step 211: The second end-side device sends a third packet to the network device in the middle of the network.

In this embodiment of this application, the second end-side device may further send the third packet to the network device in the middle of the network. The third packet includes a second application-aware identifier. The third application-aware identifier may be distributed by the controller to the second end-side device. Alternatively, the second end-side device may encapsulate the second application-aware identifier in the third packet in the method shown in step 204 and step 205.

For example, as shown in FIG. 8 and FIG. 13, if the second end-side device is a server in the data center, the server may send, to the network device in the middle of the network (for example, a load balancer in the DMZ zone), the third packet in which the second application-aware identifier is encapsulated.

Step 212: The network device in the middle of the network sends, the second end-side device based on that the third packet includes the second application-aware identifier, a fourth packet in which the second application-aware identifier is encapsulated.

After receiving the third packet sent by the second end-side device, the network device in the middle of the network may send, to the second end-side device based on that the third packet includes the second application-aware identifier, the fourth packet in which the second application-aware identifier is encapsulated. In other words, the network device in the middle of the network has an application-aware identifier self-learning capability, and may learn an application-aware identifier in a packet, and use a returned packet to carry the same application-aware identifier. For example, as shown in FIG. 8 and FIG. 13, the load balancer in the DMZ zone may send, to the server in the data center, the third packet in which the second application-aware identifier is encapsulated.

It may be understood that the third packet includes application-aware information, and the application-aware information includes the second application identifier. In step 212, the network device in the middle of the network may send, to the second end-side device based on that the third packet includes the second application-aware identifier and the application-aware information in the third packet meets a target condition, the fourth packet in which the second application-aware identifier is encapsulated. The target condition may include any one of the following conditions:
Condition 1: A reflect flag in the application-aware information is set.

As shown in (a) in FIG. 14, the application-aware information in the third packet may include a reflect (reflect) flag R. For example, a flag field in the application-aware information may carry the reflect flag R. If the reflect flag is set (for example, a value is 1), the network device in the middle of the network may encapsulate the second application-aware identifier in the fourth packet to be sent to the second end-side device, in other words, implement reflection of the second application-aware identifier.

Condition 2: A refresh flag in the application-aware information is set.

As shown in (b) in FIG. 14, the application-aware information in the third packet may include a refresh (refresh) flag R. For example, a flag field in the application-aware information may carry the refresh flag R. If the refresh flag is set (for example, a value is 1), the network device in the middle of the network may encapsulate the second application-aware identifier in the fourth packet to be sent to the second end-side device. It may be understood that the network device in the middle of the network may encapsulate another application-aware identifier in a historical packet previously sent to the second end-side device. Based on the refresh flag R in the third packet, the network device in the middle of the network may update an application-aware identifier encapsulated in a packet to be sent to the second end-side device.

Condition 3: A mark flag in the application-aware information is different from a mark flag recorded in the network device in the middle of the network.

As shown in (c) in FIG. 14, the application-aware information in the third packet may include a mark (mark) flag M. For example, a flag field in the application-aware information may carry the mark flag M. In addition, after receiving, for a first time, a packet that is sent by the second end-side device and that carries a mark flag, the network device in the middle of the network may record the mark flag. If the mark flag in the currently received third packet is different from the mark flag recorded in the network device in the middle of the network, the network device in the middle of the network may encapsulate the second application-aware identifier in the fourth packet to be sent to the second end-side device, and record the mark flag in the third packet. In other words, when the mark flag changes (for example, changes from 1 to 0, or changes from 0 to 1), the network device in the middle of the network may determine that an application-aware identifier encapsulated in a packet to be sent to the second end-side device needs to be updated.

Based on the target condition, the network device in the middle of the network can learn of an application-aware identifier based on a requirement, in other words, does not need to learn of application-aware identifiers in all received packets. Therefore, packet processing efficiency of the network device in the middle of the network is effectively improved, and application-aware identifier distribution efficiency is improved.

It may be understood that a length of the reflect flag, a length of the refresh flag, and a length of the mark flag in the conditions may all be 1 bit. In addition, for the condition 1, if the reflect flag in the application-aware information is not set, the network device in the middle of the network may send, to the second end-side device, a packet in which no application-aware identifier is encapsulated.

For the condition 2 and the condition 3, if the refresh flag in the application-aware information is not set, or the mark flag in the application-aware information is the same as the mark flag recorded in the network device in the middle of the network, the network device in the middle of the network may send a fifth packet to the second end-side device. A same application-aware identifier is encapsulated in the fifth packet and a historical packet, and the historical packet is a packet sent to the second end-side device before the fifth packet. In other words, the network device in the middle of the network does not need to update the application-aware identifier encapsulated in the packet to be sent to the second end-side device. In addition, if no application-aware identifier is encapsulated in the historical packet, no application-aware identifier needs to be encapsulated in the fifth packet.

It can be learned from the foregoing analysis that, the application-aware information carries different types of flags, so that an application-aware identifier carried in a packet sent by the network device in the middle of the network can be flexibly controlled, to effectively improve packet sending flexibility.

It may be further understood that the third packet, the fourth packet, and the fifth packet may be connection packets, or may be service packets. This is not limited in this embodiment of this application.

Step 213: The second end-side device sends a sixth packet to the network device in the middle of the network.

In this embodiment of this application, if the second end-side device requires the network device in the middle of the network to stop sending a packet in which the second application-aware identifier is encapsulated, the second end-side device may send the sixth packet to the network device in the middle of the network. Application-aware information in the sixth packet includes the second application-aware identifier and a withdraw flag, and the withdraw flag is in a set state. For example, a value of the withdraw flag is 1.

For example, as shown in (b) in FIG. 14, the application-aware information in the sixth packet may include a withdraw (withdraw) flag W. For example, a flag field in the application-aware information may carry the withdraw flag W.

Step 214: The network device in the middle of the network sends, to the second end-side device based on that the withdraw flag is set, a seventh packet in which the second application-aware identifier is not encapsulated.

After receiving the sixth packet, the network device in the middle of the network may send, to the second end-side device based on that the withdraw flag in the sixth packet is set, the seventh packet in which the second application-aware identifier is not encapsulated. In other words, the network device in the middle of the network may withdraw an application-aware identifier in a packet to be sent to the second end-side device subsequently.

It may be understood that, if the withdraw flag in the sixth packet is not set, the network device in the middle of the network may continue to use, to carry the second application-aware identifier, the packet to be sent to the second end-side device subsequently.

Optionally, as shown in (b) in FIG. 14, the packet sent by the second end-side device to the network device in the middle of the network may include both the refresh flag R and the withdraw flag W. One of the two flags may be in a set state. If neither of the two flags is set, an application-aware identifier carried in the packet to be sent by the network device in the middle of the network to the second end-side device subsequently is the same as that in the historical packet. In other words, the network device in the middle of the network does not perform an update or withdraw operation on the application-aware identifier carried in the packet.

It may be further understood that the network device in the middle of the network may also send a packet to the first end-side device in the method shown in step 211 and step 213. After receiving a packet that carries an application-aware identifier and that is sent by the network device in the middle of the network, the first end-side device may send the packet to the network device in the middle of the network in the method shown in step 212 and step 214. For example, as shown in FIG. 8 and FIG. 13, the load balancer in the DMZ zone may send, to the terminal 2, the third packet in which the second application-aware identifier is encapsulated, and the terminal 2 may also encapsulate the second application-aware identifier in the fourth packet to be sent to the load balancer.

In some scenarios, a terminal device or the network device in the middle of the network may be unable to communicate with a management plane or a controller of a network. Consequently, it is difficult for the management plane or the controller to distribute APN IDs to massive terminal devices/servers/applications running on the terminal devices/servers. Consequently, the device cannot send a packet that carries a specified APN ID. However, in this embodiment of this application, because the end-side device or the network device in the middle of the network can learn of an APN ID in a packet received by the end-side device or the network middleware, and can use a returned packet to carry the same APN ID, even if the end-side device or the network device in the middle of the network cannot communicate with the management plane or the controller, the end-side device or the network device in the middle of the network may send a packet that carries the specified APN ID.

It may be further understood that sequences of the steps of the packet sending method provided in this embodiment of this application may be properly adjusted, or steps may be correspondingly added or reduced based on a situation. For example, step 201 to step 203, or step 204 and step 205, or step 207, or step 211 to step 214 may be deleted based on a situation. Alternatively, step 204 to step 206 may be performed before step 203. To be specific, the first end-side device may detect the transmission network after sending the packet that carries the application-aware identifier or in a process of sending the packet that carries the application-aware identifier. Alternatively, step 211 to step 214 may be performed before step 210. Alternatively, step 206 may be performed before step 204. To be specific, the controller may deliver the encapsulation rule in a process in which an end-side device sends a packet.

In conclusion, this embodiment of this application provides a packet sending method. According to a first aspect, the network device in the middle of the network can forcibly inherit the first application-aware identifier encapsulated in the first packet sent by the first end-side device. Further, it may be ensured that the packet that carries the application-aware information can be normally transmitted in a plurality of connections. In addition, it may be further ensured that both the transmission link between the first end-side device and the network device in the middle of the network and the transmission link between the network device in the middle of the network and the second end-side device can provide, based on a same first application-aware identifier, the refined network service for the service flow to which the first packet belongs.

According to a second aspect, in the method provided in this embodiment of this application, whether the third-party network supports the packet that carries the application-aware information can be further detected, to avoid a packet loss of the packet that carries the application-aware information. In addition, the method may be further used to detect whether a single-domain network or a multi-domain network supports another IPv6 extension header (for example, an HBH, a DOH, or an RH).

According to a third aspect, in the solution provided in this embodiment of this application, a vertical distribution architecture of an APN ID is implemented. This resolves a problem that when an end side application cannot be upgraded for matching, or an end side application does not need to learn that an APN service is deployed, an end side cannot send a packet that carries application-aware information. In addition, a problem that, in the foregoing case, the end side cannot use specific traffic to carry APN-related information such as a specific APN ID is further resolved.

According to a fourth aspect, according to a solution for carrying the APN ID during returning provided in this embodiment of this application, a problem that it is difficult to distribute APN IDs to massive terminal devices/applications without a connection and support of the management plane/control plane access support is resolved. In addition, according to a solution of using the application-aware information to carry the reflect flag, the refresh flag, or the mark flag, APN ID distribution efficiency and packet processing efficiency of the end-side device can be effectively improved.

According to a fifth aspect, according to a security authentication solution provided in this embodiment of this application, a security/privacy protection capability of the APN ID is enhanced, and a problem that a network edge device cannot trust an APN ID carried in an external packet is resolved. In addition, a network can simultaneously provide security solutions of different security levels, and service interruption is avoided while a network resource is protected. In addition, according to the security authentication solution, a privacy disclosure problem when the APN ID traverses the third-party network is further resolved, to prevent the third-party network from associating the packet with the terminal/user/application/session based on the APN ID, and avoid initiating a directional attack on a specific single service based on the APN ID.

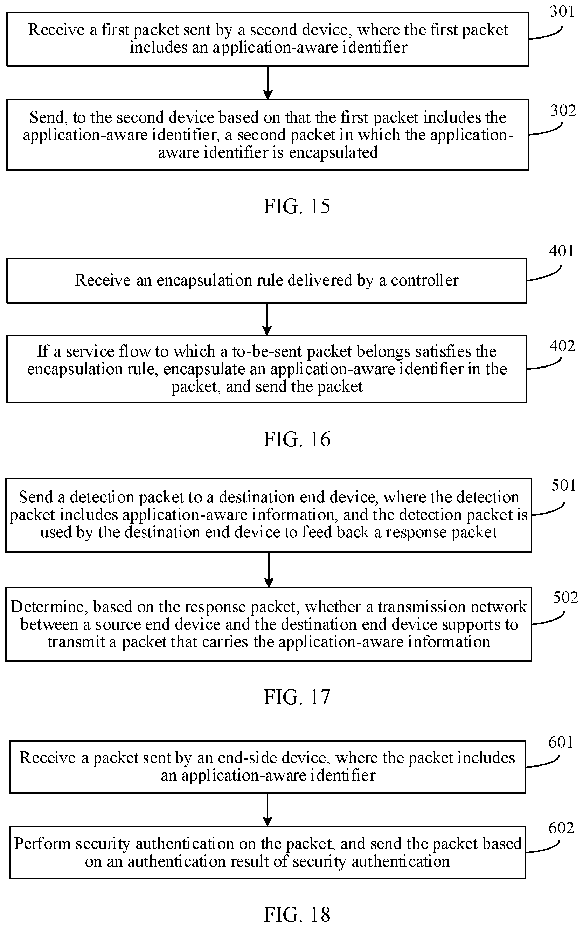

FIG. 15 is a flowchart of still another packet sending method according to an embodiment of this application. The method may be applied to a first device, and the first device may be an end-side device or a network device in the middle of the network. As shown in FIG. 15, the method includes the following steps.

Step 301: Receive a first packet sent by a second device, where the first packet includes an application-aware identifier.

Step 302: Send, to the second device based on that the first packet includes the application-aware identifier, a second packet in which the application-aware identifier is encapsulated.

In this embodiment of this application, after receiving the first packet that carries the application-aware identifier and that is sent by the second device, the first device can encapsulate the same application-aware identifier in the second packet to be sent to the second device. That is, the first device can implement carrying of the application-aware identifier during returning. Based on this, even if the first device cannot receive an application-aware identifier distributed by a controller, the first device can still send, based on an indication of the second device, a packet that carries a specified application-aware identifier, to effectively improve packet sending flexibility.

Optionally, the first packet includes application-aware information, and the aware information includes the application-aware identifier. In step 302, the first device may send, to the second device based on that the first packet includes the application-aware identifier and the application-aware information meets a target condition, the second packet in which the application-aware identifier is encapsulated. The target condition includes one of the following conditions: a reflect flag in the application-aware information is set; a refresh flag in the application-aware information is set; and a mark flag in the application-aware information is different from a mark flag recorded in the first device.

The first device and the second device each may be an end-side device. For example, the first device may be a terminal, and the second device may be a server. Alternatively, one of the first device and the second device is an end-side device, and the other is a network device in the middle of the network. For example, the first device may be a terminal, and the second device may be a network device in the middle of the network; or the first device may be a network device in the middle of the network, and the second device may be a server.

For implementation processes of step 301 and step 302, refer to related descriptions of step 211 and step 212. Details are not described herein again. In addition, the first device and the second device may further implement the method shown in step 213 and step 214.

In conclusion, this embodiment of this application provides a packet sending method. After receiving a packet that carries an application-aware identifier and that is sent by the second device, the first device may send, to the second device, a packet that carries the same application-aware identifier. In this way, the application-aware identifier is carried during returning, and a problem that when a management plane or a controller of a network cannot distribute an application-aware identifier to the first device, the first device cannot send a packet that carries a specified application-aware identifier is resolved.

FIG. 16 is a flowchart of yet another packet sending method according to an embodiment of this application. The method may be applied to an end-side device or a network device in the middle of the network. As shown in FIG. 16, the method includes the following steps.

Step 401: Receive an encapsulation rule delivered by a controller.

In this embodiment of this application, an APN agent program may be deployed in the terminal device or the network device in the middle of the network, and the APN agent program can be connected to the controller, to receive the encapsulation rule delivered by the controller.

Step 402: If a service flow to which a to-be-sent packet belongs satisfies the encapsulation rule, encapsulate an application-aware identifier in the packet, and send the packet.

An APN protocol module is further deployed in the end-side device or the network device in the middle of the network, and the APN protocol module may encapsulate the application-aware identifier in the sent packet based on the encapsulation rule.

The encapsulation rule may include traffic identification information and application information. Correspondingly, that the service flow to which the to-be-sent packet belongs satisfies the encapsulation rule may mean that: flow information of the service flow to which the packet belongs matches the traffic identification information. The process of encapsulating an application-aware identifier in the packet may include: encapsulating the application-aware identifier in the packet based on the application information.

Optionally, the end-side device may be a terminal, a server, a virtual machine, a container, or the like; or may be another deployment form or device type of an application client. The network device in the middle of the network may be a load balancer, a reverse agent device, a NAT device, or the like. In addition, for implementation processes of step 401 and step 402, refer to related descriptions of step 204 and step 205. Details are not described herein again.

In conclusion, this embodiment of this application provides a packet sending method. When it is detected that the service flow to which the to-be-sent packet belongs satisfies the encapsulation rule delivered by the controller, the end-side device or the network device in the middle of the network can encapsulate the application-aware identifier in the packet, and send the packet. In this way, a problem that when an application in the end-side device or the network device in the middle of the network cannot be upgraded for matching, or an application in the end-side device or the network device in the middle of the network does not need to learn that an APN service is deployed, the end-side device or the network device in the middle of the network cannot send a packet that carries application-aware information is resolved.

FIG. 17 is a flowchart of still yet another packet sending method according to an embodiment of this application. The method may be applied to a source end device. As shown in FIG. 17, the method includes the following steps.

Step 501: Send a detection packet to a destination end device, where the detection packet includes application-aware information, and the detection packet is used by the destination end device to feed back a response packet.

Step 502: Determine, based on the response packet, whether a transmission network between the source end device and the destination end device supports to transmit a packet that carries the application-aware information.

If the source end device determines that the transmission network supports to transmit the packet that carries the application-aware information, the source end device may use, to carry the application-aware information, a packet to be sent to the destination end device subsequently. In other words, the source end device may enable an APN function. In this way, a network can provide a refined network service for a service flow based on the application-aware information.

If the source end device determines that the transmission network does not support to transmit the packet that carries the application-aware information, the source end device does not need to use, to carry the application-aware information, a packet to be sent to the destination end device subsequently. In other words, the source end device may disable an APN function. In this way, a packet loss of a packet that carries the application-aware information can be avoided, and packet transmission reliability can be ensured.

It may be understood that, for implementation processes of step 501 and step 502, refer to related descriptions of step 201 to step 203. Details are not described herein again.

Optionally, the source end device may be an end-side device, for example, may be a terminal or a server. The destination end device may be a network device, for example, may be an edge device (also referred to as an access gateway) of an access network. Alternatively, the source end device and the destination end device each may be an end-side device. For example, the source end device may be a terminal, and the destination end device may be a server.

In conclusion, this embodiment of this application provides a packet sending method. The source end device can send the detection packet to the destination end device, and may determine, based on the response packet fed back by the destination end device, whether the transmission network between the source end device and the destination end device supports to transmit the packet that carries the application-aware information. Therefore, when it is determined that the transmission network does not support to transmit the packet that carries the application-aware information, the APN function may be disabled, to avoid a packet loss of the packet that carries the application-aware information, and ensure packet transmission reliability.

FIG. 18 is a flowchart of a further packet sending method according to an embodiment of this application. The method may be applied to a network edge device. As shown in FIG. 18, the method includes the following steps.

Step 601: Receive a packet sent by an end-side device, where the packet includes an application-aware identifier.

Step 602: Perform security authentication on the packet, and send the packet based on an authentication result of security authentication.

The network edge device may be an edge device in an access network, a backbone network, or an access zone of a data center network, and the edge device may be a network device having a packet forwarding function, for example, a router or a switch. The end-side device may be a terminal, a server, a virtual machine, a container, or the like; or

Optionally, application-aware information in the packet may include a security level, and step 602 may include: obtaining an authentication algorithm corresponding to the security level; and performing security authentication on the packet based on the authentication algorithm.

Alternatively, step 602 may include: searching for an authentication entry based on traffic information of a service flow to which the packet belongs and/or the application-aware identifier, to obtain the authentication result.

Alternatively, application-aware information in the packet includes verification information; and step 602 may include: processing the application-aware identifier based on a verification algorithm, to obtain authentication information; and verifying the authentication information based on the verification information, to obtain the authentication result.

It may be understood that, for implementation processes of step 601 and step 602, refer to related descriptions of step 207 and step 208. Details are not described herein again.

In conclusion, this embodiment of this application provides a packet sending method. The network edge device can perform security authentication on the packet sent by the end-side device, and send the packet based on an authentication result of the security authentication. In this way, security of the application-aware identifier carried in the packet and privacy protection capability are effectively enhanced, and packet transmission security is improved.

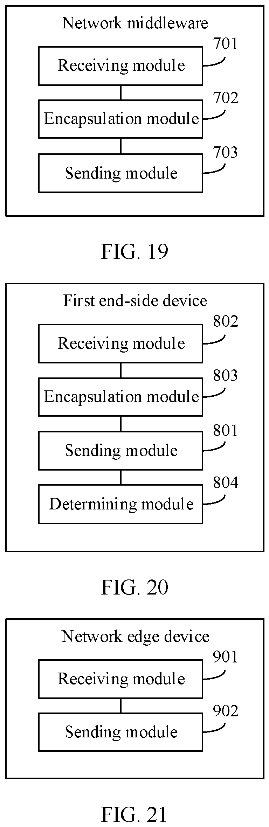

FIG. 19 is a schematic diagram of a structure of a network device in the middle of the network according to an embodiment of this application. The network device in the middle of the network is separately connected to a first end-side device and a second end-side device. In addition, the network device in the middle of the network may implement steps performed by the network device in the middle of the network in the method embodiments. As shown in FIG. 19, the network device in the middle of the network includes a receiving module 701, an encapsulation module 702, and a sending module 703.

The receiving module 701 is configured to receive a first packet sent by the first end-side device. The first packet includes a first application-aware identifier. For a function implementation of the receiving module 701, refer to related descriptions of step 101, step 102, step 206, and step 208 in the method embodiments.

The encapsulation module 702 is configured to encapsulate, based on that the first packet includes the first application-aware identifier, the first application-aware identifier in a second packet obtained by processing the first packet. For a function implementation of the encapsulation module 702, refer to related descriptions of step 103 and step 209 in the method embodiments.

The sending module 703 is configured to send the second packet to the second end-side device. For a function implementation of the sending module 703, refer to related descriptions of step 104 and step 210 in the method embodiments.

Optionally, the encapsulation module 702 is configured to: perform network address translation or port translation processing on the first packet; or encapsulate a payload in the first packet and a target packet header, where the target packet header is different from a packet header of the first packet.

Optionally, the receiving module 701 may be further configured to receive a third packet sent by the second end-side device. The third packet includes a second application-aware identifier. For a function implementation of the receiving module 701, refer to related descriptions of step 211 in the method embodiments.

The sending module 703 may be further configured to send, to the second end-side device based on that the third packet includes the second application-aware identifier, a fourth packet in which the second application-aware identifier is encapsulated. For a function implementation of the sending module 703, refer to related descriptions of step 212 in the method embodiments.

Optionally, the third packet includes application-aware information, and the aware information includes the second application-aware identifier. The sending module 703 may be configured to send, to the second end-side device based on that the third packet includes the second application-aware identifier and the application-aware information meets a target condition, the fourth packet in which the second application-aware identifier is encapsulated. The target condition may include one of the following conditions: a reflect flag in the application-aware information is set; a refresh flag in the application-aware information is set; and a mark flag in the application-aware information is different from a mark flag recorded in the network device in the middle of the network.

Optionally, the sending module 703 may be further configured to: if the reflect flag in the application-aware information is not set, send, to the second end-side device, a packet in which no application-aware identifier is encapsulated; or send a fifth packet to the second end-side device if the refresh flag in the application-aware information is not set, or the mark flag in the application-aware information is the same as the mark flag recorded in the network device in the middle of the network. A same application-aware identifier is encapsulated in the fifth packet and a historical packet, and the historical packet is a packet sent to the second end-side device before the fifth packet.

Optionally, the receiving module 701 may be further configured to receive a sixth packet sent by the second end-side device. Application-aware information in the sixth packet includes the second application-aware identifier and a withdraw flag. For a function implementation of the receiving module 701, refer to related descriptions of step 213 in the method embodiments.

The sending module 703 may be further configured to send, to the second end-side device based on that the withdraw flag is set, a seventh packet in which the second application-aware identifier is not encapsulated. For a function implementation of the sending module 703, refer to related descriptions of step 214 in the method embodiments.

In conclusion, this embodiment of this application provides a network device in the middle of the network. The network device in the middle of the network can forcibly inherit the first application-aware identifier encapsulated in the first packet sent by the first end-side device. Therefore, it may be ensured that the packet that carries the application-aware information can be normally transmitted in a plurality of connections. In addition, it may be further ensured that both the first packet transmitted between the first end-side device and the network device in the middle of the network and the second packet transmitted between the network device in the middle of the network and the second end-side device include a same first application-aware identifier. Further, it may be ensured that both a transmission link between the first end-side device and the network device in the middle of the network and a transmission link between the network device in the middle of the network and the second end-side device can provide, based on the first application-aware identifier, a refined network service for the service flow to which the first packet belongs.

FIG. 20 is a schematic diagram of a structure of a first end-side device according to an embodiment of this application. The first end-side device is connected to a second end-side device through a network device in the middle of the network. In addition, the first end-side device may implement steps performed by the first end-side device in the method embodiments. As shown in FIG. 20, the first end-side device includes:
a sending module 801, configured to send a first packet to the network device in the middle of the network. The first packet includes a first application-aware identifier. The first packet is used by the network device in the middle of the network to encapsulate, based on the first application-aware identifier, the first application-aware identifier in a second packet obtained by processing the first packet, and send the second packet to the second end-side device. For a function implementation of the sending module 801, refer to related descriptions of step 101, step 102, step 206, and step 208 in the method embodiments.

Optionally, as shown in FIG. 20, the first end-side device may further include a receiving module 802 and an encapsulation module 803.

The receiving module 802 is configured to receive an encapsulation rule delivered by a controller. For a function implementation of the receiving module 802, refer to related descriptions of step 204 in the method embodiments.

The encapsulation module 803 is configured to encapsulate the first application-aware identifier in the first packet if a service flow to which the first packet belongs satisfies the encapsulation rule. For a function implementation of the encapsulation module 803, refer to related descriptions of step 205 in the method embodiments.

Optionally, the encapsulation rule includes traffic identification information and application information. The encapsulation module 803 is configured to encapsulate the first application-aware identifier in the first packet based on the application information if flow information of the service flow to which the first packet belongs matches the traffic identification information.

Optionally, the sending module 801 may be further configured to send a detection packet to a destination end device. The detection packet includes application-aware information, and the detection packet is used by the destination end device to feed back a response packet. For a function implementation of the sending module 801, refer to related descriptions of step 201 in the method embodiments.

The first end-side device may further include a determining module 804, configured to determine, based on the response packet, whether a transmission network between the first end-side device and the destination end device supports to transmit a packet that carries the application-aware information. For a function implementation of the determining module 804, refer to related descriptions of step 203 in the method embodiments.

Optionally, the determining module 804 may be configured to: if the received response packet carries the application-aware information, or if the received response packet indicates that the destination end device has received the detection packet, determine that the transmission network supports to transmit the packet that carries the application-aware information; or if the received response packet does not carry the application-aware information, or if the received response packet indicates that the destination end device does not receive the detection packet, or if the response packet is not received within waiting duration, determine that the transmission network does not support to transmit the packet that carries the application-aware information.

Optionally, the detection packet may meet at least one of the following conditions: the application-aware information includes a detection flag; the detection packet further includes a detection option; an application-aware identifier in the application-aware information is a detection identifier indicating detection; a destination port number of the detection packet is a detection port number used for detection; and the detection packet is an internet control message protocol version 6 ICMPv6 packet.

Optionally, the receiving module 802 may be further configured to receive a third packet sent by the second end-side device. The third packet includes a second application-aware identifier.

The sending module 801 may be further configured to send, to the second end-side device based on that the third packet includes the second application-aware identifier, a fourth packet in which the second application-aware identifier is encapsulated.

Optionally, the first application-aware identifier is randomly allocated by the controller, or is dynamically updated by the controller.

In conclusion, this embodiment of this application provides a first end-side device. The first end-side device can send, to the network device in the middle of the network, the first packet in which the first application-aware identifier is encapsulated, so that the network device in the middle of the network forcibly inherits the first application-aware identifier. Therefore, it may be ensured that the packet that carries the application-aware information can be normally transmitted in a plurality of connections. In addition, it may be further ensured that both the first packet transmitted between the first end-side device and the network device in the middle of the network and the second packet transmitted between the network device in the middle of the network and the second end-side device include a same first application-aware identifier. Further, it may be ensured that both a transmission link between the first end-side device and the network device in the middle of the network and a transmission link between the network device in the middle of the network and the second end-side device can provide, based on the first application-aware identifier, a refined network service for the service flow to which the first packet belongs.

FIG. 21 is a schematic diagram of a structure of a network edge device according to an embodiment of this application. A first end-side device is connected to a network device in the middle of the network by using the network edge device, and the network device in the middle of the network is further connected to a second end-side device. In addition, the network edge device may implement steps performed by the network edge device in the method embodiments. As shown in FIG. 21, the network edge device includes a receiving module 901 and a sending module 902.

The receiving module 901 is configured to receive a first packet sent by the first end-side device. The first packet includes an application-aware identifier. For a function implementation of the receiving module 901, refer to related descriptions of step 101 and step 206 in the method embodiments.

The sending module 902 is configured to send the first packet to the network device in the middle of the network. The first packet is used by the network device in the middle of the network to encapsulate, based on the application-aware identifier, the application-aware identifier in a second packet obtained by processing the first packet, and send the second packet to the second end-side device. For a function implementation of the sending module 902, refer to related descriptions of step 102 and step 208 in the method embodiments.

Optionally, the sending module 902 may be configured to: perform security authentication on the first packet; and send the first packet to the network device in the middle of the network based on an authentication result of the security authentication. For a function implementation of the sending module 902, refer to related descriptions of step 207 in the method embodiments.

Optionally, the first packet includes application-aware information that carries the application-aware identifier, the application-aware information further includes a security level, and the sending module 902 may be configured to: obtain an authentication algorithm corresponding to the security level; and perform security authentication on the first packet based on the authentication algorithm.

Optionally, the sending module 902 may be configured to search for an authentication entry based on traffic information of a service flow to which the first packet belongs and/or the application-aware identifier, to obtain the authentication result.

Optionally, the first packet includes application-aware information that carries the application-aware identifier, and the application-aware information further includes verification information; and the sending module 902 may be configured to: process the application-aware identifier based on a verification algorithm, to obtain authentication information; and verify the authentication information based on the verification information, to obtain the authentication result.

Optionally, the application-aware identifier in the first packet is an encrypted identifier, and the sending module 902 may be configured to decrypt the application-aware identifier. If decryption succeeds, the authentication result is that authentication succeeds; or if decryption fails, the authentication result is that authentication fails.

Optionally, the sending module 902 may be configured to: send the first packet to the network device in the middle of the network if the authentication result is that authentication succeeds; and discard the first packet if the authentication result is that authentication fails.

Optionally, the sending module 902 may be configured to: if the authentication result is that authentication succeeds, send, to the network device in the middle of the network, a first packet in which a trust flag is set; or if the authentication result is that authentication fails, send, to the network device in the middle of the network, a first packet in which a trust flag is not set.

In conclusion, this embodiment of this application provides a network edge device. The network edge device can forward, to the network device in the middle of the network, the first packet that is sent by the first end-side device and in which the first application-aware identifier is encapsulated, so that the network device in the middle of the network forcibly inherits the first application-aware identifier. Therefore, it may be ensured that the packet that carries the application-aware information can be normally transmitted in a plurality of connections. In addition, it may be further ensured that both the first packet transmitted between the first end-side device and the network device in the middle of the network and the second packet transmitted between the network device in the middle of the network and the second end-side device include a same first application-aware identifier. Further, it may be ensured that both a transmission link between the first end-side device and the network device in the middle of the network and a transmission link between the network device in the middle of the network and the second end-side device can provide, based on the first application-aware identifier, a refined network service for the service flow to which the first packet belongs.

An embodiment of this application further provides a first device. The first device includes a receiving module and a sending module.

The receiving module is configured to receive a first packet sent by a second device. The first packet includes an application-aware identifier. For a function implementation of the receiving module, refer to related descriptions of step 301 in the method embodiments.

The sending module is configured to send, to the second device based on that the first packet includes the application-aware identifier, a second packet in which the application-aware identifier is encapsulated. For a function implementation of the sending module, refer to related descriptions of step 302 in the method embodiments.

Optionally, the first packet includes application-aware information, and the aware information includes the application-aware identifier. The sending module may be configured to send, to the second device based on that the first packet includes the application-aware identifier and the application-aware information meets a target condition, the second packet in which the application-aware identifier is encapsulated.

The target condition includes one of the following conditions: a reflect flag in the application-aware information is set; a refresh flag in the application-aware information is set; and a mark flag in the application-aware information is different from a mark flag recorded in the first device.

Optionally, the first device and the second device each may be an end-side device. For example, the first device may be a terminal, and the second device may be a server. Alternatively, one of the first device and the second device is an end-side device, and the other is a network device in the middle of the network. For example, the first device may be a terminal, and the second device may be a network device in the middle of the network; or the first device may be a network device in the middle of the network, and the second device may be a server.

An embodiment of this application further provides a packet sending device. The packet sending device may be a terminal device or network device in the middle of the network. In addition, the packet sending device includes a receiving module and a sending module.

The receiving module is configured to receive an encapsulation rule delivered by a controller. For a function implementation of the receiving module, refer to related descriptions of step 401 in the method embodiments.

The sending module is configured to: if a service flow to which a to-be-sent packet belongs satisfies the encapsulation rule, encapsulate an application-aware identifier in the packet, and send the packet. For a function implementation of the sending module, refer to related descriptions of step 402 in the method embodiments.

The encapsulation rule includes traffic identification information and application information. Correspondingly, that the service flow to which the to-be-sent packet belongs satisfies the encapsulation rule may mean that: flow information of the service flow to which the packet belongs matches the traffic identification information. The process of encapsulating an application-aware identifier in the packet may include: encapsulating the application-aware identifier in the packet based on the application information.

Optionally, the end-side device may be a terminal, a server, a virtual machine, or a container; or may be another deployment form or device type of an application client. The network device in the middle of the network may be a load balancer, a reverse agent device, a NAT device, or the like.

An embodiment of this application further provides a source end device. The source end device includes a sending module and a determining module.

The sending module is configured to send a detection packet to a destination end device. The detection packet includes application-aware information, and the detection packet is used by the destination end device to feed back a response packet. For a function implementation of the sending module, refer to related descriptions of step 501 in the method embodiments.

The determining module is configured to determine, based on the response packet, whether a transmission network between the source end device and the destination end device supports to transmit a packet that carries the application-aware information. For a function implementation of the determining module, refer to related descriptions of step 502 in the method embodiments.

The source end device may be an end-side device, for example, may be a terminal or a server. The destination end device may be a network device, for example, may be an edge device (also referred to as an access gateway) of an access network. Alternatively, the source end device and the destination end device each may be an end-side device. For example, the source end device may be a terminal, and the destination end device may be a server.

An embodiment of this application further provides a network edge device. The network edge device includes a receiving module and a sending module.

The receiving module is configured to receive a packet sent by an end-side device. The packet includes an application-aware identifier. For a function implementation of the receiving module, refer to related descriptions of step 601 in the method embodiments.

The sending module is configured to: perform security authentication on the packet, and send the packet based on an authentication result of security authentication. For a function implementation of the sending module, refer to related descriptions of step 602 in the method embodiments.

Optionally, application-aware information in the packet includes a security level, and the sending module may be configured to: obtain an authentication algorithm corresponding to the security level; and perform security authentication on the packet based on the authentication algorithm.

Alternatively, the sending module may be configured to search for an authentication entry based on traffic information of a service flow to which the packet belongs and/or the application-aware identifier, to obtain the authentication result.

Alternatively, application-aware information in the packet includes verification information; and the sending module may be configured to: process the application-aware identifier based on a verification algorithm, to obtain authentication information; and verify the authentication information based on the verification information, to obtain the authentication result.

Alternatively, the application-aware identifier in the packet is an encrypted identifier, and the sending module may be configured to decrypt the application-aware identifier. If decryption succeeds, the authentication result is that authentication succeeds; or if decryption fails, the authentication result is that authentication fails.

Optionally, the network edge device may be an edge device in an access network, a backbone network, or an access zone of a data center network, and the edge device may be a network device having a packet forwarding function, for example, a router or a switch.

It may be clearly understood by a person skilled in the art that, for the purpose of convenient and brief description, for a detailed working process of each device and each module in each device described above, refer to a corresponding process in the method embodiments. Details are not described herein again.

It should be understood that each device provided in embodiments of this application may be further implemented by using an application-specific integrated circuit (application-specific integrated circuit, ASIC) or a programmable logic device (programmable logic device, PLD). The PLD may be a complex program logic device (complex programmable logical device, CPLD), a field-programmable gate array (field-programmable gate array, FPGA), a generic array logic (generic array logic, GAL), or any combination thereof. In addition, the packet sending method provided in the method embodiments may also be implemented by using software. When the packet sending method provided in the method embodiments is implemented by using software, each functional module in the network device in the middle of the network, the end-side device, and the network edge device may also be a software module.

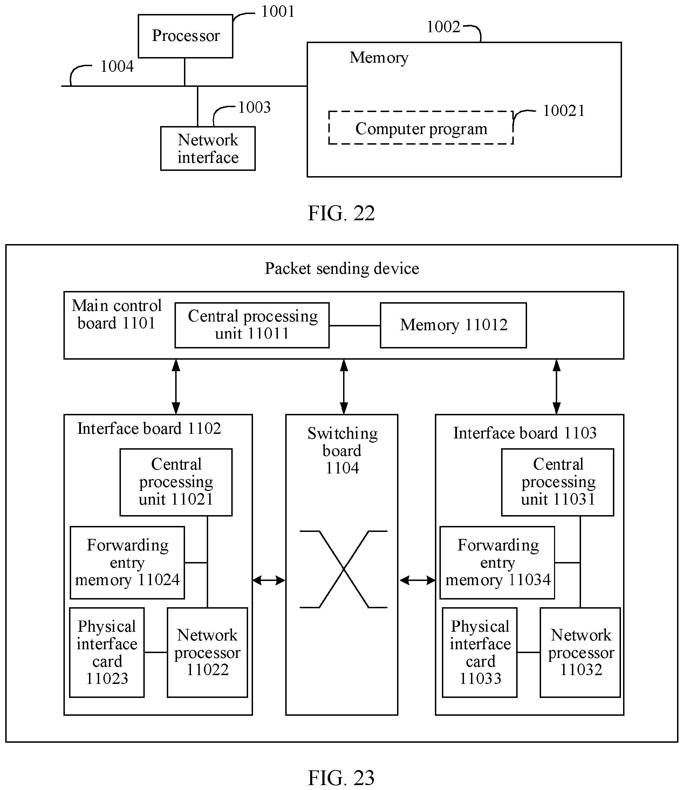

FIG. 22 is a schematic diagram of a structure of a packet sending device according to an embodiment of this application. The packet sending device may be used in a system shown in FIG. 1, FIG. 8, or FIG. 13, and may be a network device in the middle of the network, an end-side device, or a network edge device in the system. As shown in FIG. 22, the packet sending device includes a processor 1001, a memory 1002, a network interface 1003, and a bus 1004.

The memory 1002 stores a computer program 10021, and the computer program 10021 is used to implement various application functions. The processor 1001 is configured to execute the computer program 10021, to implement steps performed by the end-side device, the network device in the middle of the network, or the network edge device in the method embodiments. For example, the processor 1001 is configured to execute the computer program 10021, to implement functions of each module shown in any one of FIG. 19 to FIG. 21.

The processor 1001 may be a central processing unit (central processing unit, CPU), or the processor 1001 may be another general-purpose processor, a digital signal processor (digital signal processor, DSP), an ASIC, an FPGA, a graphics processing unit (graphics processing unit, GPU), or another programmable logic device, a discrete gate or transistor logic device, a discrete hardware component, or the like. The general-purpose processor may be a microprocessor or any conventional processor.

The memory 1002 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

There may be a plurality of network interfaces 1003, and the network interface 1003 is configured to implement a communication connection (which may be wired or wireless) to another device. In this embodiment of this application, the network interface 1003 is configured to receive and send a packet. The another device may be a device such as a terminal, a server, or a VM, or another network device.

The bus 1004 is configured to be connected to the processor 1001, the memory 1002, and the network interface 1003. In addition, in addition to a data bus, the bus 1004 may further include a power bus, a control bus, a status signal bus, and the like. However, for clear description, various types of buses in the figure are marked as the bus 1004.

If the packet sending device is the network device in the middle of the network, the processor 1001 may be configured to: receive, through the network interface 1003, a first packet sent by a first end-side device, where the first packet includes a first application-aware identifier; encapsulate, based on that the first packet includes the first application-aware identifier, the first application-aware identifier in a second packet obtained by processing the first packet; and send the second packet to a second end-side device through the network interface 1003. For a specific function of the processor 1001, refer to steps performed by the network device in the middle of the network in the method embodiments.

If the packet sending device is a first end-side device, the processor 1001 may be configured to send a first packet to the network device in the middle of the network through the network interface 1003. The first packet includes an application-aware identifier. The first packet is used by the network device in the middle of the network to encapsulate, based on the application-aware identifier, the application-aware identifier in a second packet obtained by processing the first packet, and send the second packet to a second end-side device. For a specific function of the processor 1001, refer to steps performed by the end-side device in the method embodiments.

If the packet sending device is the network edge device, the processor 1001 may be configured to: receive, through the network interface 1003, a first packet sent by a first side-side device, where the first packet includes an application-aware identifier; and send the first packet to the network middleware. The first packet is used by the network device in the middle of the network to encapsulate, based on the application-aware identifier, the application-aware identifier in a second packet obtained by processing the first packet, and send the second packet to a second end-side device. For a specific function of the processor 1001, refer to steps performed by the network edge device in the method embodiments.

FIG. 23 is a schematic diagram of a structure of another packet sending device according to an embodiment of this application. The packet sending device may be used in a system shown in FIG. 1, FIG. 8, or FIG. 13, and may be a network device in the middle of the network, an end-side device, or a network edge device in the system. As shown in FIG. 23, the packet sending device may include: a main control board 1101 and at least one interface board (the interface board is also referred to as a line card or a service board), for example, an interface board 1102 and an interface board 1103 shown in FIG. 23. In a case of a plurality of interface boards, the packet sending device may further include a switching board 1104. The switching board 1104 is configured to complete data exchange between the interface boards.

The main control board 1101 is also referred to as a main processing unit (main processing unit, MPU) or a route processing card (route processor card), and the main control board 1101 is configured to complete functions such as system management, device maintenance, and protocol processing. The main control board 1101 mainly includes three types of functional units: a system management and control unit, a system clock unit, and a system maintenance unit. The main control board 1101 includes a central processing unit 11011 and a memory 11012.

The interface board 1102 and the interface board 1103 are also referred to as a line processing unit (line processing unit, LPU), a line card (line card), or a service board. The interface board is configured to: provide various service interfaces and implement packet forwarding. A service interface provided by the interface board may include: a packet over SONET/SDH (packet over SONET/SDH, POS) interface, a gigabit Ethernet (gigabit Ethernet, GE) interface, an asynchronous transfer mode (asynchronous transfer mode, ATM) interface, or the like. SONET is a synchronous optical network (synchronous optical network), and SDH is a synchronous digital hierarchy (synchronous digital hierarchy). The main control board 1101, the interface board 1102, and the interface board 1103 are connected to a system backplane through a system bus, to implement interworking. As shown in FIG. 23, the interface board 1102 includes one or more central processing units 11021. The central processing unit 11021 is configured to: control and manage the interface board 1102, and communicate with the central processing unit 11011 on the main control board 1101. A memory 11024 on the interface board 1102 is configured to store a forwarding entry, and a network processor 11022 may forward a packet by searching the forwarding entry stored in the memory 11024. The memory 11024 may be further configured to store program code.

The interface board 1102 further includes one or more physical interface cards 11023, and the one or more physical interface cards 11023 are configured to: receive a packet sent by a previous-hop node, and send a processed packet to a next-hop node based on an indication of the central processing unit 11021.

In addition, it may be understood that, the central processing unit 11021 and/or the network processor 11022 in the interface board 1102 in FIG. 23 each may be dedicated hardware or a chip. For example, an ASIC may be used to implement the foregoing functions. Such an implementation is a manner in which a forwarding plane performs processing by using the dedicated hardware or the chip. In another implementation, the central processing unit 11021 and/or the network processor 11022 may alternatively implement the functions described above by using a general-purpose processor, for example, a general CPU.

In addition, it should be understood that there may be one or more main control boards 1101. When there are a plurality of main control boards, the main control boards may include an active main control board and a standby main control board. There may be one or more interface boards, and a stronger data processing capability of the packet sending device indicates that more interface boards are provided. As shown in FIG. 23, the packet sending device includes an interface board 1102 and an interface board 1103. When a distributed forwarding mechanism is used, a structure of the interface board 1103 is basically the same as a structure of the interface board 1102, and operations on the interface board 1103 are basically similar to operations on the interface board 1102. For brevity, details are not described again. When the packet sending device has a plurality of interface boards, the plurality of interface boards may communicate with each other by using one or more switching boards 1104, and may implement load sharing and backup redundancy, to provide a large-capacity data exchange and processing capability.

In a centralized forwarding architecture, the packet sending device may not need the switching board 1104, and the interface board undertakes a service data processing function of an entire system. Therefore, a data access and processing capability of the packet sending device in the distributed architecture is greater than that of the packet sending device in the centralized architecture. A specific architecture that is to be used depends on a specific networking deployment scenario. This is not limited herein.

In this embodiment of this application, the memory 11012 and the memory 11024 each may be a ROM or another type of static storage device that may store static information and instructions; or each may be a RAM or another type of dynamic storage device that may store information and instructions; or may be an EEPROM, a compact disc read-only memory (compact disc read-only Memory, CD-ROM), another compact disc storage, an optical disc storage (including a compact disc, a laser disc, an optical disc, a digital versatile disc, a Blu-ray disc, or the like), a disk storage medium, another disk storage device, or any other medium that can be used to carry or store expected program code in an instruction or data structure form and that can be accessed by a computer. However, the memory 11012 and the memory 11024 are not limited thereto. The memory 11024 on the interface board 1102 may exist independently, and is connected to the central processing unit 11021 through a communication bus; or the memory 11024 may be integrated with the central processing unit 11021. The memory 11012 on the main control board 1101 may exist independently, and is connected to the central processing unit 11011 through a communication bus; or the memory 11012 may be integrated with the central processing unit 11011.

The program code stored in the memory 11024 is controlled and executed by the central processing unit 11021, and the program code stored in the memory 11012 is controlled and executed by the central processing unit 11011. The central processing unit 11021 and/or the central processing unit 11011 may implement, by executing the program code, the method that is performed by any device and that is provided in the method embodiments. The program code stored in the memory 11024 and/or program code stored in the memory 11012 each may include one or more software units. The one or more software units may be functional modules shown in any one of FIG. 19 to FIG. 21.

In this embodiment of this application, the physical interface card 11023 may be configured to communicate with another device or a communication network by using any transceiver-type apparatus. The communication network may be the Ethernet, a radio access network (radio access network, RAN), a wireless local area network (wireless local area network, WLAN), or the like.

Optionally, the device shown in any one of FIG. 19 to FIG. 22 may also be implemented by using a structure shown in FIG. 23.

An embodiment of this application further provides a computer-readable storage medium. The computer-readable storage medium stores instructions. When the instructions are run on a processor, the processor is enabled to perform steps performed by the network device in the middle of the network, the end-side device, or the network edge device in the method embodiments.

An embodiment of this application further provides a computer program product including instructions. When the instructions are run on a processor, the processor is enabled to perform steps performed by the network device in the middle of the network, the end-side device, or the network edge device in the method embodiments.

An embodiment of this application further provides a packet sending system. As shown in FIG. 1, the packet sending system includes a first end-side device 01, a second end-side device 02, and a network device in the middle of the network 03 configured to connect the first end-side device 01 and the second end-side device 02. For functions of the network device in the middle of the network 03 and the first end-side device 01, refer to related descriptions in embodiments shown in FIG. 6 and FIG. 7A and FIG. 7B.

Optionally, as shown in FIG. 1 and FIG. 8, the system may further include a network edge device 04, and the first end-side device 01 is connected to the network device in the middle of the network 03 by using the network edge device 04. In addition, for a function of the network edge device 04, refer to related descriptions in embodiments shown in FIG. 6 and FIG. 7A and FIG. 7B.

Optionally, the first end-side device 01, the second end-side device 02, and the network device in the middle of the network 03 may further implement steps in the method embodiment shown in FIG. 15. The first end-side device 01 and the second end-side device 02 may further implement steps in the method embodiment shown in FIG. 16. The first end-side device 01, the second end-side device 02, and the network edge device 04 may further implement steps in the method embodiment shown in FIG. 17. The network edge device 04 may further implement steps in the method embodiment shown in FIG. 18.

A structure of the network device in the middle of the network 03 may be shown in FIG. 19, FIG. 22, or FIG. 23, a structure of the first end-side device 01 may be shown in FIG. 20, FIG. 22, or FIG. 23, and a structure of the network edge device 04 may be shown in FIG. 21, FIG. 22, or FIG. 23.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance. The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A packet sending method, applied to a network device in the middle of the network, wherein the network device in the middle of the network is separately connected to a first end-side device and a second end-side device, and the method comprises:
receiving a first packet sent by the first end-side device, wherein the first packet comprises a first application-aware identifier;
encapsulating, based on that the first packet comprises the first application-aware identifier, the first application-aware identifier in a second packet obtained by processing the first packet; and
sending the second packet to the second end-side device.

2. The method according to claim 1, wherein the processing the first packet comprises:
performing network address translation or port translation processing on the first packet; or
encapsulating a payload in the first packet and a target packet header, wherein the target packet header is different from a packet header of the first packet.

3. The method according to claim 1 or 2, wherein the method further comprises:
receiving a third packet sent by the second end-side device, wherein the third packet comprises a second application-aware identifier; and
sending, to the second end-side device based on that the third packet comprises the second application-aware identifier, a fourth packet in which the second application-aware identifier is encapsulated.

4. The method according to claim 3, wherein the third packet comprises application-aware information, and the application-aware information comprises the second application-aware identifier; and
the sending, to the second end-side device based on that the third packet comprises the second application-aware identifier, a fourth packet in which the second application-aware identifier is encapsulated comprises:
sending, to the second end-side device based on that the third packet comprises the second application-aware identifier and the application-aware information meets a target condition, the fourth packet in which the second application-aware identifier is encapsulated, wherein the target condition comprises one of the following conditions:
a reflect flag in the application-aware information is set;
a refresh flag in the application-aware information is set; and
a mark flag in the application-aware information is different from a mark flag recorded in the network device in the middle of the network.

5. The method according to claim 4, wherein the method further comprises:
if the reflect flag in the application-aware information is not set, sending, to the second end-side device, a packet in which no application-aware identifier is encapsulated; or
sending a fifth packet to the second end-side device if the refresh flag in the application-aware information is not set, or the mark flag in the application-aware information is the same as the mark flag recorded in the network device in the middle of the network, wherein
a same application-aware identifier is encapsulated in the fifth packet and a historical packet, and the historical packet is a packet sent to the second end-side device before the fifth packet.

6. The method according to any one of claims 3 to 5, wherein after the sending, to the second end-side device, a fourth packet in which the second application-aware identifier is encapsulated, the method further comprises:
receiving a sixth packet sent by the second end-side device, wherein application-aware information in the sixth packet comprises the second application-aware identifier and a withdraw flag; and
sending, to the second end-side device based on that the withdraw flag is set, a seventh packet in which the second application-aware identifier is not encapsulated.

7. A packet sending method, applied to a first end-side device, wherein the first end-side device is connected to a second end-side device through a network device in the middle of the network, and the method comprises:
sending a first packet to the network device in the middle of the network, wherein the first packet comprises a first application-aware identifier, wherein
the first packet is used by the network device in the middle of the network to encapsulate, based on the first application-aware identifier, the first application-aware identifier in a second packet obtained by processing the first packet, and send the second packet to the second end-side device.

8. The method according to claim 7, wherein before the sending a first packet to the network device in the middle of the network, the method further comprises:
receiving an encapsulation rule delivered by a controller; and
encapsulating the first application-aware identifier in the first packet if a service flow to which the first packet belongs satisfies the encapsulation rule.

9. The method according to claim 8, wherein the encapsulation rule comprises traffic identification information and application information; and
the encapsulating the first application-aware identifier in the first packet if a service flow to which the first packet belongs satisfies the encapsulation rule comprises:
encapsulating the first application-aware identifier in the first packet based on the application information if flow information of the service flow to which the first packet belongs matches the traffic identification information.

10. The method according to any one of claims 7 to 9, wherein the method further comprises:
sending a detection packet to a destination end device, wherein the detection packet comprises application-aware information, and the detection packet is used by the destination end device to feed back a response packet; and
determining, based on the response packet, whether a transmission network between the first end-side device and the destination end device supports to transmit a packet that carries the application-aware information.

11. The method according to claim 10, wherein the determining, based on the response packet, whether a transmission network between the first end-side device and the destination end device supports to transmit a packet that carries the application-aware information comprises:
if the received response packet carries the application-aware information, or if the received response packet indicates that the destination end device has received the detection packet, determining that the transmission network supports to transmit the packet that carries the application-aware information; or
if the received response packet does not carry the application-aware information, or if the received response packet indicates that the destination end device does not receive the detection packet, or if the response packet is not received within waiting duration, determining that the transmission network does not support to transmit the packet that carries the application-aware information.

12. The method according to claim 10 or 11, wherein the detection packet meets at least one of the following conditions:
the application-aware information comprises a detection flag;
the detection packet further comprises a detection option;
an application-aware identifier in the application-aware information is a detection identifier indicating detection;
a destination port number of the detection packet is a detection port number used for detection; and
the detection packet is an internet control message protocol version 6 ICMPv6 packet.

13. The method according to any one of claims 7 to 12, wherein the method further comprises:
receiving a third packet sent by the second end-side device, wherein the third packet comprises a second application-aware identifier; and
sending, to the second end-side device based on that the third packet comprises the second application-aware identifier, a fourth packet in which the second application-aware identifier is encapsulated.

14. The method according to any one of claims 7 to 13, wherein
the first application-aware identifier is randomly allocated by the controller, or is dynamically updated by the controller.

15. A packet sending method, applied to a network edge device, wherein a first end-side device is connected to a network device in the middle of the network by using the network edge device, the network device in the middle of the network is further connected to a second end-side device, and the method comprises:
receiving a first packet sent by the first end-side device, wherein the first packet comprises an application-aware identifier; and
sending the first packet to the network device in the middle of the network, wherein
the first packet is used by the network device in the middle of the network to encapsulate, based on the application-aware identifier, the application-aware identifier in a second packet obtained by processing the first packet, and send the second packet to the second end-side device.

16. The method according to claim 15, wherein the sending the first packet to the network device in the middle of the network comprises:
performing security authentication on the first packet; and
sending the first packet to the network device in the middle of the network based on an authentication result of the security authentication.

17. The method according to claim 16, wherein the first packet comprises application-aware information that carries the application-aware identifier, the application-aware information further comprises a security level, and the performing security authentication on the first packet comprises:
obtaining an authentication algorithm corresponding to the security level; and
performing security authentication on the first packet based on the authentication algorithm.

18. The method according to claim 16, wherein the performing security authentication on the first packet comprises:
searching for an authentication entry based on traffic information of a service flow to which the first packet belongs and/or the application-aware identifier, to obtain the authentication result.

19. The method according to claim 16, wherein the first packet comprises application-aware information that carries the application-aware identifier, and the application-aware information further comprises verification information; and
the performing security authentication on the first packet comprises:
processing the application-aware identifier based on a verification algorithm, to obtain authentication information; and
verifying the authentication information based on the verification information, to obtain the authentication result.

20. The method according to claim 16, wherein the application-aware identifier in the first packet is an encrypted identifier, and the performing security authentication on the first packet comprises:
decrypting the application-aware identifier, wherein
if decryption succeeds, the authentication result is that authentication succeeds; or if decryption fails, the authentication result is that authentication fails.

21. The method according to any one of claims 16 to 20, wherein the sending the first packet to the network device in the middle of the network based on an authentication result of the security authentication comprises:
sending the first packet to the network device in the middle of the network if the authentication result is that authentication succeeds; and
the method further comprises: discarding the first packet if the authentication result is that authentication fails.

22. The method according to any one of claims 16 to 20, wherein the sending the first packet to the network device in the middle of the network based on an authentication result of the security authentication comprises:
if the authentication result is that authentication succeeds, sending, to the network device in the middle of the network, a first packet in which a trust flag is set; or
if the authentication result is that authentication fails, sending, to the network device in the middle of the network, a first packet in which a trust flag is not set.

23. A packet sending device, wherein the packet sending device comprises a memory, a processor, and a computer program that is stored in the memory and that is capable of being run on the processor, and when the processor executes the computer program, the method according to any one of claims 1 to 22 is implemented.

24. A computer-readable storage medium, wherein the computer-readable storage medium stores instructions, and when the instructions are run on a processor, the processor is enabled to perform the method according to any one of claims 1 to 22.

25. A computer program product comprising instructions, wherein the instructions are executed by a processor, to implement the method according to any one of claims 1 to 22.

26. A packet transmission system, wherein the packet transmission system comprises: a first end-side device, a second end-side device, and network device in the middle of the network that is separately connected to the first end-side device and the second end-side device; and
the network device in the middle of the network is configured to implement the method according to any one of claims 1 to 6, and the first end-side device is configured to implement the method according to any one of claims 7 to 14.

27. The system according to claim 26, wherein the packet transmission system further comprises a network edge device, and the first end-side device is connected to the network device in the middle of the network by using the network edge device; and
the network edge device is configured to implement the method according to any one of claims 15 to 22.
